(19) **Europäisches Patentamt / European Patent Office / Office européen des brevets**

(11) **EP 2 270 556 A1**

(12) **EUROPEAN PATENT APPLICATION**
published in accordance with Art. 153(4) EPC

(43) Date of publication:
**05.01.2011 Bulletin 2011/01**

(21) Application number: **09732100.4**

(22) Date of filing: **14.04.2009**

(51) Int Cl.:
*G02B 5/02* (2006.01)  *B60K 35/00* (2006.01)
*G02B 5/00* (2006.01)  *G02F 1/13357* (2006.01)

(86) International application number:
**PCT/JP2009/057496**

(87) International publication number:
**WO 2009/128443 (22.10.2009 Gazette 2009/43)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.04.2008 JP 2008107778**
**07.07.2008 JP 2008177103**
**07.07.2008 JP 2008177121**
**31.07.2008 JP 2008198408**
**08.01.2009 JP 2009002968**

(71) Applicants:
• **Sumitomo Electric Industries, Ltd.**
**Chuo-ku**
**Osaka-shi**
**Osaka 541-0041 (JP)**

• **Sumitomo Electric Fine Polymer, Inc.**
**Sennan-gun, Osaka 590-0458 (JP)**

(72) Inventors:
• **YORITA, Jun**
**Sennan-gun**
**Osaka 590-0458 (JP)**
• **TAKUSHIMA, Michiko**
**Yokohama-shi**
**Kanagawa 244-8588 (JP)**
• **SANO, Tomomi**
**Yokohama-shi**
**Kanagawa 244-8588 (JP)**

(74) Representative: **Cross, Rupert Edward Blount**
**Boult Wade Tennant**
**Verulam Gardens**
**70 Gray's Inn Road**
**London WC1X 8BT (GB)**

(54) **LIGHT DISTRIBUTION CONTROL PANEL, DISPLAY DEVICE MOUNTED ON MOBILE OBJECT, LIGHT DISTRIBUTION CONTROL SHEET, OPTICAL COMPONENT, LIGHTING DEVICE AND DISPLAY DEVICE**

(57)    There is provided a light distribution control panel that can suppress reflection on a glass surface in a mobile unit when the light distribution control panel is applied to a display device mounted on the mobile unit, and a display device for mounting on a mobile unit in which the light distribution control panel is used. A light distribution control panel (1) includes a base body (7) serving as a plate-like or sheet-like base material made of a translucent material, and the base body (7) has a plurality of convex portions (2) for light distribution control formed on one surface opposite to the backlight (11) side of the base body (7). The plurality of convex portions (2) are positioned to extend in parallel to one another. The light distribution control panel (1) includes a light transmission/reflection suppressing portion (a surface of one side surface (6) having higher roughness than that of a surface of the other side surface (5)) for suppressing emission, from at least a part (one side surface (6)) of a surface of the convex portion (2), of light incident from a surface of the base body (7) on the light source side.

EP 2 270 556 A1

## FIG.2

## Description

TECHNICAL FIELD

The present invention relates to a light distribution control panel, a display device for mounting on a mobile unit, a light distribution control sheet, an optical component, a lighting device, and a display device. More particularly, the present invention relates to a light distribution control panel that can control light distribution, and a display device for mounting on a mobile unit. Specifically, the present invention relates to a light distribution control sheet for efficiently emitting light from a light source in a particular direction, as well as a light distribution control panel and a display device in which the sheet is used. In addition, the present invention relates to an optical component that can be suitably used for viewing angle control. Furthermore, the present invention relates to a lighting device and a display device in which such an optical component is used.

BACKGROUND ART

A light distribution control panel that controls light distribution direction of light has conventionally been known (see, for example, Japanese Patent Laying-Open No. 2000-193809 (hereinafter referred to as Patent Document 1)). Patent Document 1 discloses a sheet-like light distribution control panel made of a translucent material for the purpose of efficiently directing light toward a particular direction without impairing softening of light, wherein light control means (e.g., a prism that is a linear projection having a triangular cross-sectional shape) for light distribution control with a minute shape is formed on one surface on a light source side, and second light control means (e.g., a minute prism, a diffraction grating or a diffusing surface) with a further minute shape is formed on one surface of the prism. In Patent Document 1, the use of the light distribution control panel mainly in outdoor lighting equipment is assumed.

In addition, in recent years, a display device for presenting various information to a driver and the like, for example a car navigation system and the like, has been mounted in many cases on a mobile unit typified by a vehicle. Such a display device is generally positioned on a dashboard in front of the driver's seat. In some cases, an image displayed on the display device is reflected on a windshield of the vehicle, depending on the angle at which the windshield is placed. During nighttime, the reflected image is visually identified clearly, which may result in an obstacle to driving.

Under these circumstances, Japanese Patent Laying-Open No. 2001-305312 (hereinafter referred to as Patent Document 2), for example, discloses a liquid crystal display panel, wherein an optical element is positioned between a backlight and a liquid crystal panel, and the optical element includes a louver film having first and second main surfaces and a polarizing film stacked on and fixed to the first main surface of this louver film. In this liquid crystal display panel, a louver in the optical element produces the effect of controlling, to a prescribed emission angle range, a traveling method of light passing through the louver film, and thus, unnecessary emission of light passing through the liquid crystal panel toward the direction of right and left side surfaces is suppressed. The presence of the polarizing film enhances the luminance of the light passing through the liquid crystal panel. In addition, in this display panel, the emission angle range of the light passing through the liquid crystal panel can be controlled by changing the angle of the louver in the louver film with respect to light from the backlight.

Patent Document 1 also discloses a plate-like or sheet-like light distribution control sheet, wherein first light control means for light distribution control with a minute shape is provided on one surface on a light source side, and second light control means with a further minute shape is provided on at least one surface of the light control means, as described above. In this light distribution control sheet, a prism or a diffraction grating serving as the first light control means refracts light incident from outside the sheet, thereby controlling the emission direction of light passing through the sheet. In addition, a very small prism, a very small cone-shaped projection or a light diffusing surface is described as an example of the second light control means. Together with the first light control means, this second light control means distributes light toward a direction in which the first light control means wants to control light, and enhances the light distribution characteristics of the light passing through the sheet.

An optical component that employs the viewing angle control technique has also been used for a display such as a liquid crystal display in order to prevent a peep at a display of a mobile phone or a display of a personal computer, as in the case of preventing reflection on a front panel of the car navigation as described above. In such an optical component, light from the display is emitted only to a certain range of the viewing angle.

Such an optical component includes a louver disclosed in Non-Patent Document 1. In this louver, a plurality of light blocking plates are arranged in one direction with respective main surfaces facing one another. According to the louver, light incident to the louver at a certain angle or more can be blocked.

The louver disclosed in Non-Patent Document 1, however, blocks a part of light having an angle at which light transmission is desired, that is, light incident to the louver at a small incidence angle. As a result, in order to increase the luminance of a display including this louver, it is required to increase an output of a light source.

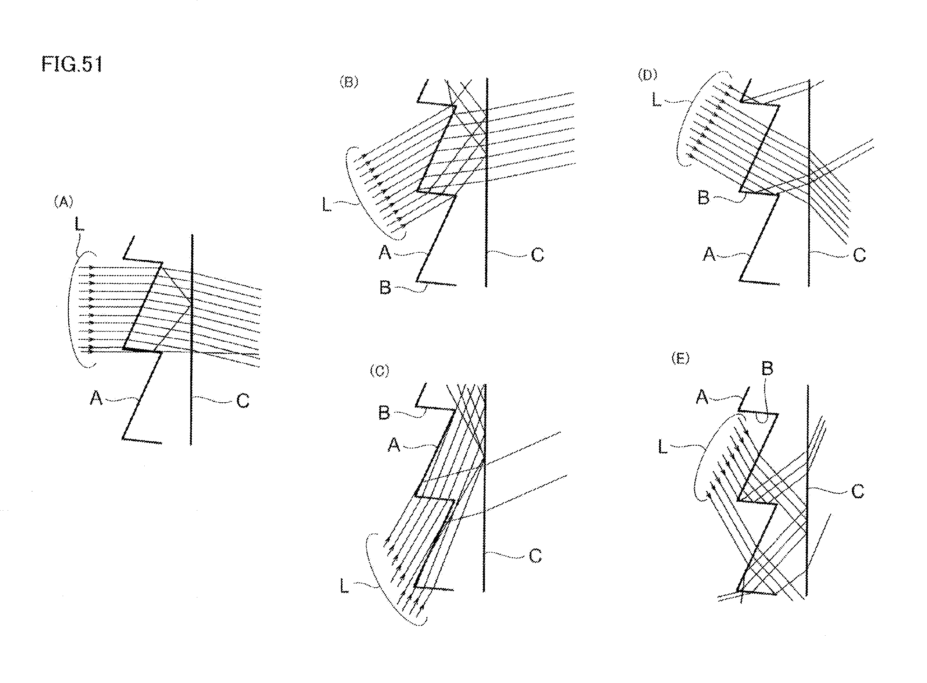

On the other hand, Patent Document 1 discloses, as a panel for lighting equipment, a panel having a plurality of prism elements arranged therein as described above. Fig. 51 illustrates a path of light incident to a conventional panel having a plurality of prism elements arranged therein. Fig. 51 (A) illustrates a path of light L incident to the panel in a direction orthogonal to an emission plane. Fig. 51(B) illustrates a path of light L incident from the lower side in the figure at a shallow angle. Fig. 51(C) illustrates a path of light L incident from the lower side in the figure at a deep angle. Fig. 51(D) illustrates a path of light L incident from the upper side in the figure at a shallow angle. Fig. 51(E) illustrates a path of light L incident from the upper side in the figure at a deep angle.

As shown in Fig. 51, this panel includes an emission plane, and a plurality of first surfaces and a plurality of second surfaces provided alternately. A first surface A and a second surface B are provided along different surfaces inclined with respect to an emission plane C. An inclination angle formed by first surface A with respect to the emission plane is smaller than an inclination angle formed by second surface B with respect to the emission plane. In addition, adjacent first surface A and second surface B as well as the emission plane configure a prism element.

As shown in Fig. 51, in this panel, light is not emitted in the upward direction in the figure by using the prism element to change light distribution. In this panel, as shown in Fig. 51(E), the light incident from the upper side in the figure at the deep angle is reflected by second surface B and emitted in the upward direction in the figure. In order to prevent this, processing for roughening second surface B is performed on the panel disclosed in Patent Document 1.

PRIOR ART DOCUMENTS

PATENT DOCUMENTS

Patent Document 1: Japanese Patent Laying-Open No. 2000-193809
Patent Document 2: Japanese Patent Laying-Open No. 2001-305312
Non-Patent Document 1: "View Control Technology by Shin-Etsu VCF," Monthly Display, May issue of 2006, pp. 62-69

SUMMARY OF THE INVENTION

PROBLEMS TO BE SOLVED BY THE INVENTION

As already described, in recent years, the display device has been mounted on the mobile unit typified by a vehicle, in order to display various information. For example, the display device includes a display device of the car navigation system of the vehicle, a display device for presenting information about vehicle driving to the driver, and the like. These display devices are positioned on the dashboard on the front side of the vehicle, for example. As described above, contents displayed by the display device may be reflected on the windshield adjacent to the dashboard. Such reflection is not preferable because the reflection obstructs the view of the driver of the vehicle. Thus, the use of the above light distribution control panel is considered in order to suppress such reflection. Patent Document 1, however, discloses an example of the light distribution control panel whose use mainly in outdoor lighting equipment is assumed. Patent Document 1 does not disclose preferable conditions and configuration of the light distribution control panel for suppressing the reflection on the glass surface of the display device mounted on the mobile unit as described above.

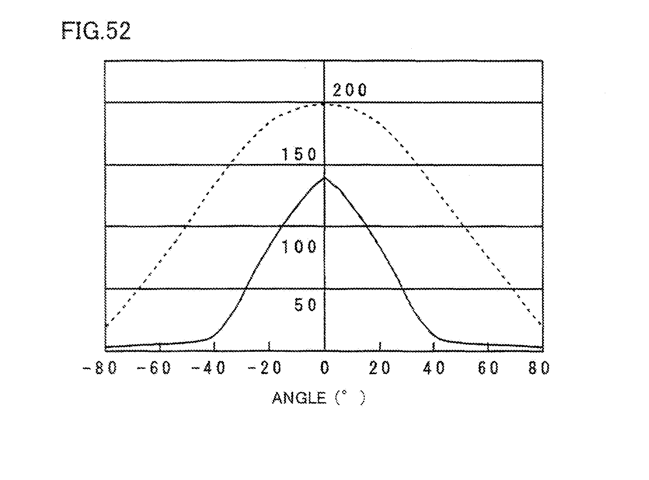

Fig. 52 is a graph showing the luminance in a display surface of a liquid crystal display device in which a louver film is used. This figure is a graph showing one example of the effect of using the louver film. As indicated by the broken line in the figure, when the louver film is not used, light passing through a liquid crystal panel spreads out at a wide emission angle almost symmetrically from the front toward the right and left directions. On the other had, as indicated by the solid line in the figure, when the louver film is used, light passing through the liquid crystal panel spreads out only at a narrow emission angle, and the light distribution characteristics of light are enhanced. This emission angle, that is, the viewing angle at which the light arrives is determined depending on the spacing of arrangement of the louver, the angle of the louver and the thickness of the louver (length in the optical axis direction).

In the liquid crystal display panel disclosed in Patent Document 2, however, the louver film blocks light from the backlight. Thus, the front luminance of the display device decreases, and in addition, the efficiency of use of light is significantly low and the luminance of the panel display surface is insufficient. Therefore, the luminance of the backlight must be increased, and means for preventing an increase in electric power consumption and an increase in temperature of the liquid crystal display panel is required.

On the other hand, in the light distribution control sheet disclosed in Patent Document 1, the second light control means controls emission of light incident to the second light control means, toward the direction controlled by the first light control means. Therefore, the efficiency of use of light is enhanced and the front luminance can be maintained high. The peak of the luminance distribution as seen from the front of the sheet moves to a position that has shifted from the front to either right or left.

In other words, the peak of the luminance distribution shifts in the direction in which the first light control means wants to control light.

In this light distribution control sheet, however, light also passes in a direction different from the direction in which the first light control means wants to control light. Therefore, light is also emitted to a viewing angle that is not required essentially. Accordingly, even if this light distribution control sheet is used in the display panel, it is expected that upward emission cannot all be prevented and reflection on the windshield of the vehicle cannot be sufficiently prevented.

On the other hand, the louver disclosed in Non-Patent Document 1 blocks a part of light having an angle at which light transmission is desired. As a result, in order to increase the luminance of the display including this louver, it is required to increase an output of the light source.

In addition, in order to apply the panel disclosed in Patent Document 1 to the display, it is required to decrease the cycle of each prism element to the order of several hundreds micrometers. Processing for roughening the second surface of the prism element having such a cycle is difficult or requires a highly sophisticated processing technique.

The present invention has been made to solve the above problems, and one object of the present invention is to provide a light distribution control panel that can suppress reflection on a glass surface in a mobile unit when the light distribution control panel is applied to a display device mounted on the mobile unit, and a display device for mounting on a mobile unit in which the light distribution control panel is used.

In addition, another object of the present invention is to achieve light distribution control for obtaining the relatively high front luminance and reducing emission to an unnecessary viewing angle.

Furthermore, still another object of the present invention is to provide an optical component having a viewing angle control function and having high efficiency of use of light. Moreover, a further object of the present invention is to provide a lighting device and a display device in which such an optical component is used.

Additionally, a further object of the present invention is to provide an optical component that controls the emission direction of light, has high efficiency of use of light and can be readily processed. In addition, a further object of the present invention is to provide a lighting device and a display device in which such an optical component is used.

MEANS FOR SOLVING THE PROBLEMS

A light distribution control panel according to the present invention is directed to a light distribution control panel, including a plate-like or sheet-like base material made of a translucent material, and the base material has a plurality of convex portions for light distribution control formed on one surface of the base material opposite to a light source side. The plurality of convex portions are positioned to extend in parallel to one another. The light distribution control panel includes a light transmission suppressing portion for suppressing emission, from at least a part of a surface of the convex portion, of light incident from a surface of the base material on the light source side.

With such a configuration, in a direction perpendicular to a direction in which the convex portion in the light distribution control panel extends, the light distribution of light passing through and emitted from the light distribution control panel can be controlled to be different on the right and left sides. For example, in a region of the convex portion on the one corner portion side of corner portions at opposite ends located at a boundary portion between the convex portion and the surface of the base material in a cross section in the above direction perpendicular to the direction in which the convex portion extends, the viewing angle at which a low luminance region having a reduced luminance (intensity) of light is formed can be relatively increased, whereas in a region of the convex portion on the other corner portion side, the viewing angle at which the low luminance region having a reduced luminance (intensity) of light is formed can be relatively decreased.

In the above light distribution control panel, the light transmission suppressing portion may include a light absorbing layer formed on the surface of the convex portion. In this case, the light absorbing layer can absorb at least a part of light emitted from the surface of the convex portion, and thus, the luminance of light in a direction in which the light emitted from the surface of the convex portion is released can be reduced. As a result, as for light emitted through a region where the light absorbing layer is formed, the viewing angle of a region that forms the low luminance region can be effectively increased.

In the above light distribution control panel, the light transmission suppressing portion may include a different refractive index layer formed on the surface of the convex portion and having a refractive index different from a refractive index of a material that configures the convex portion. In this case, by adjusting the refractive index of the different refractive index layer, the emission direction of light emitted from the surface of the convex portion can be changed. Therefore, the luminance of light in a direction in which light emitted through a region where the different refractive index layer is formed travels when the different refractive index layer is not present can be reduced. As a result, in this direction, the viewing angle of the region that forms the low luminance region can be effectively increased.

In the above light distribution control panel, the convex portion may have a triangle-like cross section in a direction perpendicular to a direction in which the convex portion extends. The light transmission suppressing portion may suppress emission of the light in the convex portion from one side surface that is continuous with any one of two corner portions located at a boundary portion between the convex portion and the surface of the base material in the cross section.

In this case, the convex portion can act as a prism. Therefore, by adjusting the angle of the corner portion located at the boundary portion between the convex portion and the surface of the base material in the cross section of the convex portion as well as the shape of the side surface that is continuous with the corner portion, the light distribution characteristics of light emitted from the surface (one surface opposite to the light source side of the base material) where the convex portion is formed in the light distribution control panel can be controlled. By using the light transmission suppressing portion to suppress the light emitted from the side surface that is continuous with one corner portion, the luminance of light in the direction in which the light emitted from the side surface that is continuous with the one corner portion is released can be reduced. Therefore, in this direction, the viewing angle of the region that forms the low luminance region can be effectively increased.

In the above light distribution control panel, the light transmission suppressing portion may include a light source side light absorbing layer formed on a light source side surface of the base material to block at least a part of a path of light emitted from the one side surface, of light incident from the light source side surface to the base material when the light source side surface is flat. In this case, the light source side light absorbing layer can be absorb at least a part of light to be incident to one side surface. Therefore, the luminance of light in the direction in which the light emitted from the one side surface is released can be reduced. As a result, in this direction, the viewing angle of the region that forms the low luminance region can be effectively increased.

In the above light distribution control panel, the light transmission suppressing portion may include a groove formed on a light source side surface of the base material to intersect a path of light emitted from the one side surface, of light incident from the light source side surface to the base material when the light source side surface is flat.

In this case, at least a part of light to be incident to one side surface can be reflected or refracted at the side surface of the groove. Therefore, the luminance of light in the direction in which the light emitted from the one side surface is released can be reduced. As a result, in this direction, the viewing angle of the region that forms the low luminance region can be effectively increased.

In the above light distribution control panel, in the convex portion, roughness of the one side surface may be larger than roughness of the other side surface that is continuous with the other corner portion of the two corner portions. In this case, the light emitted from one side surface can be scattered at the one side surface. Therefore, the luminance of light in the direction in which the light emitted from the one side surface is released can be reduced. As a result, in this direction, the viewing angle of the region that forms the low luminance region can be effectively increased.

In the above light distribution control panel, a ratio (A/B) between roughness A of the one side surface that is continuous with one corner portion and roughness B of the other side surface that is continuous with the other corner portion may be 3 or more and 3000 or less. In this case, the light emitted from one side surface can be scattered more reliably.

In addition, the reason why the numerical range of the ratio (A/B) between surface roughness A of one side surface and roughness B of the other side surface is determined is that the above numerical range allows suppression of the amount of light reaching a glass surface (e.g., a glass surface at a driver's seat) of a mobile unit from a display device for mounting on a mobile unit to which the above light distribution control panel is applied, by setting the one side surface side to the glass surface side, when the display device is positioned in the proximity of the glass surface. Therefore, reflection of displayed contents on the glass surface can be sufficiently suppressed. It is noted that the ratio (A/B) is preferably set to 50 or more and 1000 or less.

In the above light distribution control panel, the other corner portion of the two corner portions may have an angle $\alpha$ of 5° or more and 40° or less, and the one corner portion may have an angle $\beta$ of 60° or more and 90° or less. In this case, in the direction perpendicular to the direction in which the convex portion in the light distribution control panel extends, the light distribution of light passing through and emitted from the light distribution control panel can be reliably controlled to be different on the right and left sides.

In addition, the reason why the angle range of angle $\alpha$ is determined is that the angle range as described above allows prevention of reflection on the glass surface of an image displayed by the display device and suppression of degradation in front luminance of the display device to an acceptable range, when the light distribution control panel is applied to the above display device for mounting on a mobile unit. It is noted that angle $\alpha$ is preferably set to 10° or more and 30° or less.

Furthermore, the reason why the angle range of angle $\beta$ is determined is that the angle range as described above allows suppression of leakage of light from the light distribution control panel to the glass surface side to a sufficiently low level, when the light distribution control panel is applied to the display device for mounting on a mobile unit. It is noted that angle $\beta$ is preferably set to 60° or more and 90° or less.

In the above light distribution control panel, the base material may have a refractive index of 1.4 or more and 1.6 or less.

It is noted that the reason why the refractive index of the base material is set to 1.4 or more and 1.6 or less is that a material having such a refractive index is commonly available at low cost, which is effective at suppressing an increase in cost of the light distribution control panel. It is noted that the material may have a refractive index of 1.4 or more and 1.5 or less.

In addition, the light distribution control panel may have a light transmittance of 70% or more. It is noted that the reason why the light transmittance of the light distribution control panel is set to 70% or more is that an output of the light source required to maintain the luminance in a display surface of the display device at a fixed level can be suppressed by suppressing the light absorption rate in the light distribution control panel to be low, when the above light distribution control panel is applied to the display device, for example. For example, when the above light distribution control panel is applied to a liquid crystal display device, an output (luminance) of a backlight device needs to be made large enough to cover a loss in the light distribution control panel in order to ensure the sufficient luminance of the display surface if the light distribution control panel has a low light transmittance. By increasing the light transmittance of the light distribution control panel as described above, such a loss of light in the light distribution control panel can be decreased, which can result in a decrease in luminance of the backlight. As a result, the electric power consumption of the liquid crystal display device (display device) can be decreased, and thus, the power-saving and efficient display device can be implemented. It is noted that the light transmittance may be set to 80% or more.

In the above light distribution control panel, a width of the convex portion in the direction perpendicular to the direction in which the convex portion extends may be 20 μm or more and 500 μm or less. In addition, the lower limit of the width may be set to 50 μm or more and the upper limit of the width is preferably set to 100 μm or less. In this case, assuming that the light distribution control panel is applied to, for example, the display device and the like mounted on the mobile unit, the width (pitch) of the convex portion can be reduced to be less than or equal to the resolution of the human eye. Therefore, as for light that has passed through the light distribution control panel, recognition by human beings of the presence of the convex portion and an uncomfortable feeling about displayed contents displayed by using the light can be suppressed. In addition, by setting the above width to 100 μm or less, human beings hardly recognize the presence of the convex portion, and thus, the above effect can be reliably obtained.

It is noted that the reason why the lower limit of the pitch is set to 20 μm is to reduce, to a reasonable range, the manufacturing cost and the manufacturing time of a die used to manufacture the light distribution control panel.

The above light distribution control panel is directed to a light distribution control panel for a light source of a display device mounted on a mobile unit such as a vehicle. The effect of the present invention is particularly prominent when the light distribution control panel of the present invention is used in the light source of the display device mounted on the mobile unit in such a manner.

A display device for mounting on a mobile unit according to the present invention, includes: a light source; the above light distribution control panel; and a display unit. The light distribution control panel is positioned on the light source. The display unit is mounted on the light distribution control panel. With such a configuration, a direction in which arrival of light emitted from the display device is not desired can be configured as the low luminance region by adjusting the arrangement of the light distribution control panel (the direction in which the convex portion extends), when the display device is mounted on the mobile unit. Therefore, a defect due to the light emitted from the display device (e.g., reflection of a displayed image on a windshield) can be lessened.

The above display device for mounting on a mobile unit may be positioned at a site adjacent to a glass surface in a mobile unit, and the display device for mounting on a mobile unit may be positioned such that a direction perpendicular to a direction in which the convex portion extends matches a direction toward the glass surface. In this case, the direction toward the glass surface can be configured as the low luminance region, and thus, reflection on the glass surface of an image displayed by the display device can be suppressed.

A light distribution control panel according to the present invention is directed to a light distribution control panel, including a plate-like or sheet-like base material made of a translucent material, and the base material has a plurality of convex portions for light distribution control formed on one surface of the base material on a light source side. The plurality of convex portions are positioned to extend in parallel to one another and each has a triangle-like cross section in a direction perpendicular to a direction in which the convex portion extends. The base material has a refractive index of 1.4 or more and 1.6 or less. The light distribution control panel has a light transmittance of 70% or more. It is noted that the light transmittance herein refers to a transmittance of light having a wavelength of 400 nm or more and 700 nm or less. In the convex portion, one corner portion of two corner portions located at a boundary portion between the convex portion and a surface of the base material in the cross section has an angle β of 60° or more and 90° or less, and the other corner portion has an angle α of 5° or more and 40° or less. A ratio (A/B) between roughness A of one side surface of a surface of the convex portion that is continuous with the one corner portion and roughness B of the other side surface of the surface of the convex portion that is continuous with the other corner portion is 3 or more and 3000 or less.

With such a configuration, in the direction perpendicular to the direction in which the convex portion in the light distribution control panel extends, the light distribution of light passing through and emitted from the light distribution control panel can be controlled to be different on the right and left sides. For example, in a region of the convex portion on one corner portion side, the viewing angle of a low luminance region having a reduced luminance (intensity) of light can be relatively increased, whereas in a region of the convex portion on the other corner portion side, the viewing angle of the low luminance region having a reduced luminance (intensity) of light can be relatively decreased. In this case, the intensity of light passing through the light distribution control panel can be maintained, as compared with a configuration in which light traveling toward a region that should form the low luminance region is simply blocked.

It is noted that the reason why the refractive index of the base material is set to 1.4 or more and 1.6 or less is that a material which is commonly available at low cost has the above range of the refractive index. It is noted that the base material may have a refractive index of 1.45 or more and 1.55 or less.

In addition, the reason why the light transmittance of the light distribution control panel is set to 70% or more is that light emitted from a light source such as a backlight can be effectively made full use of, which allows a decrease in luminance of the mounted light source and electric power savings. It is noted that the light transmittance may be set to 80% or more.

Furthermore, the reason why the angle range of angle $\alpha$ is determined as described above is that this angle range allows prevention of reflection of an image on a windshield and allows light distribution without degrading the luminance (front luminance) on the front side of the light distribution control panel when the light distribution control panel according to the present invention is applied to the display device mounted on the mobile unit, as already described.

Moreover, the reason why the angle range of angle $\beta$ is determined as described above is that this angle range allows sufficient suppression of leakage of light to the windshield, as already described. It is noted that angle $\beta$ is preferably set to 70° or more and 90° or less.

Additionally, the reason why the numerical range of the ratio (A/B) between surface roughness A of one side surface and roughness B of the other side surface is determined is that this numerical range allows sufficient suppression of leakage of light to the windshield side as described above. It is noted that the ratio (A/B) is preferably set to 50 or more and 100 or less.

In the above light distribution control panel, a width of the convex portion in the direction perpendicular to the direction in which the convex portion extends may be 20 $\mu$m or more and 500 $\mu$m or less. In addition, the width is preferably set to 100 $\mu$m or less. In this case, assuming that the light distribution control panel is applied to, for example, the display device mounted on the mobile unit, the width (pitch) of the convex portion can be reduced to be less than or equal to the resolution of the human eye. Therefore, as for light that has passed through the light distribution control panel, recognition by human beings of the presence of the convex portion and an uncomfortable feeling about displayed contents displayed by using the light can be suppressed. In addition, by setting the above width to 100 $\mu$m or less, human beings hardly recognize the presence of the convex portion, and thus, the above effect can be reliably obtained.

It is noted that the reason why the lower limit of the pitch is set to 20 $\mu$m is that when the pitch is set to less than 20 $\mu$m, enormous manufacturing cost and manufacturing time of a die are required and manufacturing at practical manufacturing cost becomes difficult.

The above light distribution control panel is directed to a light distribution control panel for a light source of a display device mounted on a mobile unit such as a vehicle. The effect of the present invention is particularly prominent when the light distribution control panel of the present invention is used in the light source of the display device mounted on the mobile unit in such a manner.

A display device for mounting on a mobile unit according to the present invention includes: a light source; the above light distribution control panel; and a display unit. The light distribution control panel is positioned on the light source. The display unit is mounted on the light distribution control panel. With such a configuration, a direction in which arrival of light emitted from the display device is not desired can be configured as the low luminance region by adjusting the arrangement of the light distribution control panel (the direction in which the convex portion extends), when the display device is mounted on the mobile unit. Therefore, a defect due to the light emitted from the display device (e.g., reflection of a displayed image on a windshield) can be lessened.

The above display device for mounting on a mobile unit may be positioned at a site adjacent to a glass surface in a mobile unit, and the display device for mounting on a mobile unit may be positioned such that a direction perpendicular to a direction in which the convex portion extends matches a direction toward the glass surface. In this case, the direction toward the glass surface can be configured as the low luminance region, and thus, reflection of an image displayed by the display device on the glass surface can be suppressed.

In addition, a light distribution control sheet according to the present invention is directed to a light distribution control sheet including one or a plurality of linear convex portions on a translucent sheet-like base material. The convex portion has at least two light distribution control surfaces that each forms a different acute angle or right angle with respect to a surface of the base material. The light distribution control sheet includes a light control member provided on at least a part of a region of the light distribution control surface of the two light distribution control surfaces that forms a large angle with respect to the surface of the base material.

Furthermore, an optical component according to the present invention includes: a first lens array; a second lens array; and a light blocking portion array. The first lens array has a plurality of first lens elements arranged in one direction. The second lens array has a plurality of second lens elements arranged in one direction. The light blocking portion array has a plurality of light blocking portions arranged in one direction with a spacing therebetween. The plurality of first lens elements each has a convex incidence surface. The plurality of second lens elements each has a convex emission surface. The first lens array collects a part of incident light between the plurality of light blocking portions and couples the part of incident light to the second lens array, and couples, to any one of the plurality of light blocking portions, at least in part a different part of incident light incident at a larger angle with respect to an optical axis of the plurality of first lens elements than an angle formed by an incident direction of the part of incident light with respect to the optical axis.

According to the optical component of the present invention, of incident light, a part of light incident at a small angle with respect to the optical axis of the first lens element is collected by the first lens array between the light blocking portions and is emitted from the second lens array. On the other hand, incident light incident at a large angle with respect to the optical axis of the first lens element is blocked by the light blocking portion. In addition, since the second lens element has the convex emission surface, light coupled to the second lens array is emitted at a small angle with respect to an optical axis of the second lens element. Accordingly, in the present optical component, emitted light provides a small viewing angle and the efficiency of use of light emitted at a small angle with respect to the optical axis of the second lens element is enhanced.

In the optical component of the present invention, the light blocking portion is not preferably located on the optical axis of the plurality of first lens elements and on the optical axis of the second lens elements. In addition, in the optical component of the present invention, the light blocking portion is preferably located between a boundary between adjacent first lens elements and a boundary between adjacent second lens elements. Furthermore, the optical axis of the plurality of first lens elements matches the optical axis of the plurality of second lens elements. Cylindrical lenses can be used as the plurality of first lens elements and the plurality of second lens elements.

In addition, the present invention relates to a lighting device. This lighting device includes: a light source; and a light guiding plate for guiding, to the above optical component, light emitted from the light source. It is noted that the light guiding plate includes any members if the member has a light guiding function, and includes a diffusing plate, for example.

Furthermore, the present invention also relates to a display device. This display device includes: the above lighting device; and a liquid crystal panel for receiving light emitted from the lighting device and emitting the light.

Moreover, an optical component according to the present invention includes: a first prism array; and a second prism array. The first prism array has an incidence plane as well as a plurality of first surfaces and a plurality of second surfaces. The plurality of first surfaces and the plurality of second surfaces are provided alternately. The second prism array has an emission plane as well as a plurality of third surfaces and a plurality of fourth surfaces. The plurality of third surfaces and the plurality of fourth surfaces are provided alternately. Adjacent first surface and second surface extend along surfaces inclined with respect to the incidence plane and intersecting each other. An inclination angle formed by the plurality of first surfaces with respect to the incidence plane is smaller than an inclination angle formed by the plurality of second surfaces with respect to the incidence plane. The adjacent first surface and second surface as well as the incidence plane configure a prism element. Adjacent third surface and fourth surface extend along surfaces inclined with respect to the emission plane and intersecting each other. An inclination angle formed by the plurality of third surfaces with respect to the emission plane is smaller than an inclination angle formed by the plurality of fourth surfaces with respect to the emission plane. The adjacent third surface and fourth surface as well as the emission plane configure a prism element. The first prism array and the second prism array are spaced such that the first surface faces the third surface and the second surface faces the fourth surface. A refractive index of the first prism array and a refractive index of the second prism array are larger than a refractive index of a medium between the first prism array and the second prism array. The optical component of the present invention can emit light in a limited direction. In addition, the amount of light traveling toward a direction other than the direction, that is, a loss is small. Furthermore, this optical component eliminates the need for processing for surface roughening.

In the optical component of the present invention, an angle formed by the fourth surface with respect to the emission plane is preferably 85° or less. The medium may be a layer of air. The refractive index of the first prism array is preferably lower than the refractive index of the second prism array.

In addition, a lighting device of the present invention includes the above optical component of the present invention. Furthermore, a display device of the present invention includes the above optical component of the present invention.

EFFECTS OF THE INVENTION

According to the present invention, a decrease in intensity of light can be suppressed and the low luminance region can be formed in a particular direction of the viewing angle. Therefore, particularly when the present invention is applied to the display device for mounting on the mobile unit, reflection of an image on the adjacent glass surface and the like can be effectively suppressed.

In addition, according to the present invention, a decrease in intensity of light can be suppressed and the low luminance region can be formed in a particular direction of the viewing angle. Therefore, particularly when the present invention is applied to the display device for mounting on the mobile unit, reflection of an image on the adjacent glass surface and the like can be effectively suppressed.

Furthermore, according to the present invention, the light distribution control sheet has the linear convex portion having the two light distribution control surfaces that form different angles with respect to the surface of the base material. The light distribution control sheet includes the light control member provided at at least the part of the region of the light distribution control surface that forms a large angle with respect to the foregoing surface of the base material, of the foregoing two light distribution control surfaces. Therefore, the high front luminance is maintained, and in addition, the light distribution characteristics to either right or left visual field are enhanced and emission to the other visual field, that is, unnecessary viewing angle is almost suppressed.

Moreover, according to the present invention, there is provided an optical component having a viewing angle control function and high efficiency of use of light. Additionally, according to the present invention, there is provided a lighting device and a display device in which this optical component is used.

Besides, according to the present invention, there is provided an optical component that controls the emission direction of light, has high efficiency of use of light and can be readily processed. In addition, according to the present invention, there is provided a lighting device and a display device in which such an optical component is used.

BRIEF DESCRIPTION OF THE DRAWINGS

Fig. 1 is a schematic perspective view illustrating a first embodiment of a light distribution control panel according to the present invention.

Fig. 2 is a schematic side view of the light distribution control panel shown in Fig. 1.

Fig. 3 is a schematic diagram of a display device in which the light distribution control panel shown in Figs. 1 and 2 is used.

Fig. 4 is a schematic diagram of a vehicle that is one example of a mobile unit on which the display device shown in Fig. 3 is mounted.

Fig. 5 is a schematic diagram of a dashboard of the vehicle shown in Fig. 4.

Fig. 6 is a schematic side view illustrating a second embodiment of the light distribution control panel according to the present invention.

Fig. 7 is a schematic side view illustrating a modification of the light distribution control panel shown in Fig. 6.

Fig. 8 is a schematic side view illustrating a third embodiment of the light distribution control panel according to the present invention.

Fig. 9 is a schematic side view illustrating a modification of the light distribution control panel shown in Fig. 8.

Fig. 10 is a schematic partial cross-sectional view of a light distribution control panel according to the present invention.

Fig. 11 is a schematic cross-sectional view illustrating a configuration of a display device in which the light distribution control panel shown in Fig. 10 is used.

Fig. 12 is a schematic diagram of an optical system used for simulation.

Fig. 13 is a graph showing the simulation result when an angle $\alpha$ of the other corner portion is 15°.

Fig. 14 is a graph showing the simulation result when angle $\alpha$ of the other corner portion is 20°.

Fig. 15 is a graph showing the simulation result when angle $\alpha$ of the other corner portion is 25°.

Fig. 16 is a graph showing the simulation result when angle $\alpha$ of the other corner portion is 30°.

Fig. 17 is an exploded perspective view of a light distribution control panel that is one embodiment of the present invention.

Fig. 18 is a partially cutaway end view of a light distribution control sheet used in the above light distribution control panel.

Fig. 19 is a schematic diagram illustrating, by way of example, the relationship between the viewing angle and the luminance at the front of the above light distribution control panel.

Fig. 20 is a partially cutaway end view of a light distribution control sheet that is another embodiment of the present invention.

Fig. 21 illustrates the relationship between the viewing angle and the luminance when the light distribution control panel of the present invention is simulated, in which angle $\alpha$ formed by a first light distribution control surface and a base material surface is 30°.

Fig. 22 illustrates the relationship between the viewing angle and the luminance when the light distribution control panel of the present invention is simulated, in which angle $\alpha$ formed by the first light distribution control surface and the base material surface is 25°.

Fig. 23 illustrates the relationship between the viewing angle and the luminance when the light distribution control panel of the present invention is simulated, in which angle $\alpha$ formed by the first light distribution control surface and the base material surface is 20°.

Fig. 24 illustrates the relationship between the viewing angle and the luminance when the light distribution control panel of the present invention is simulated, in which angle $\alpha$ formed by the first light distribution control surface and the base material surface is 15°.

Fig. 25 illustrates the relationship between the viewing angle and the luminance when the light distribution control panel of the present invention and a light distribution control panel as a reference example that does not include a light control member are used.

Fig. 26 is a partially cutaway end view of a light distribution control sheet that is still another embodiment of the present invention.

Fig. 27 is an enlarged end view of a convex portion of a light distribution control sheet that is a further embodiment of the present invention.

Fig. 28 is an enlarged end view of a convex portion of a light distribution control sheet that is a further embodiment of the present invention.

Fig. 29 schematically illustrates an optical component according to one embodiment.

Fig. 30 illustrates a path of light incident to the optical component according to one embodiment.

Fig. 31 illustrates the relationship between the emission angle and the transmittance of light in the optical component according to one embodiment.

Fig. 32 schematically illustrates an optical component according to another embodiment.

Fig. 33 schematically illustrates an optical component according to still another embodiment.

Fig. 34 schematically illustrates an optical component according to a further embodiment.

Fig. 35 schematically illustrates an optical component according to a further embodiment.

Fig. 36 schematically illustrates an optical component according to a further embodiment.

Fig. 37 schematically illustrates a display device according to one embodiment. Fig. 38 schematically illustrates a display device according to another embodiment.

Fig. 39 schematically illustrates an optical component according to one embodiment.

Fig. 40 illustrates a path of light incident to the optical component according to one embodiment.

Fig. 41 illustrates angles formed by a light beam shown in Fig. 40(D) with respect to lines normal to respective surfaces of the optical component according to one embodiment.

Fig. 42 is a graph showing the relationship between an angle α2 formed by a third surface with respect to an emission plane in a second prism array and the angle at which the light beam shown in Fig. 41 is emitted from the emission plane.

Fig. 43 illustrates a path of light incident to an optical component according to one embodiment.

Fig. 44 illustrates angles formed by the light beam shown in Figs. 43(D) and (E) with respect to lines normal to respective surfaces of the optical component according to one embodiment.

Fig. 45 is a graph showing the relationship between the angle at which the light beam shown in Fig. 44 is incident to an incidence plane and the angle at which the light beam shown in Fig. 44 is emitted from an emission plane.

Fig. 46 is a graph showing the relationship between the angle at which the light beam shown in Fig. 44 is incident to the incidence plane and the angle at which the light beam shown in Fig. 44 is emitted from the emission plane.

Fig. 47 is a graph showing the relationship between the angle at which the light beam shown in Fig. 44 is incident to the incidence plane and the angle at which the light beam shown in Fig. 44 is emitted from the emission plane.

Fig. 48 illustrates the angle distribution of the luminance of light related to an optical component according to an example of the present invention.

Fig. 49 schematically illustrates a display device according to one embodiment.

Fig. 50 schematically illustrates a display device according to another embodiment.

Fig. 51 illustrates a path of light incident to a conventional panel in which a plurality of prism elements are arranged.

Fig. 52 illustrates the relationship between the viewing angle and the luminance in a liquid crystal display panel as a conventional example in which a louver film is used.

MODES FOR CARRYING OUT THE INVENTION

Embodiments of the present invention will be described hereinafter with reference to the drawings. The same or corresponding portions are denoted with the same reference characters in the following drawings, and description thereof will not be repeated.

(First Embodiment)

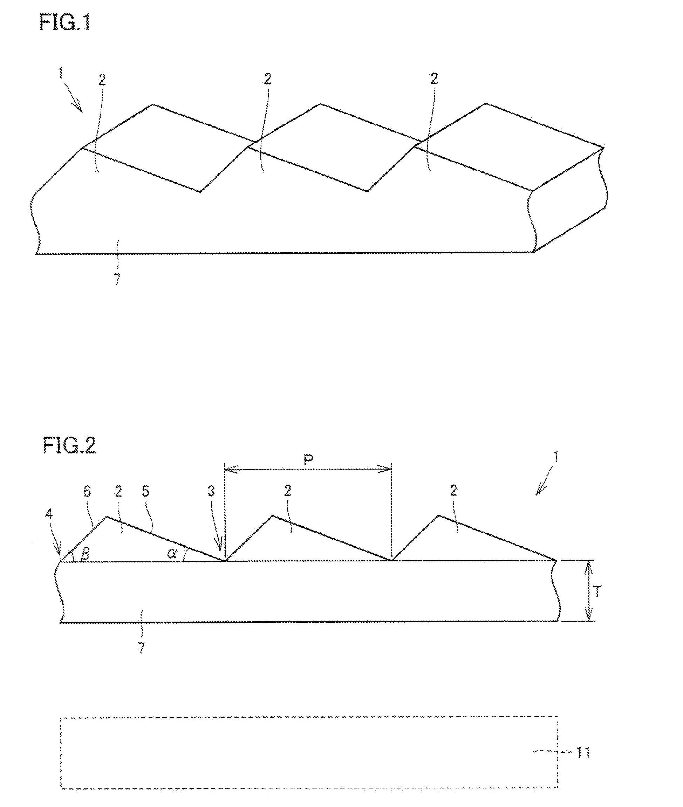

A light distribution control panel according to the present invention, a display device, and a vehicle serving as a mobile unit on which the display device is mounted will be described hereinafter with reference to Figs. 1 to 5.

As shown in Figs. 1 and 2, a light distribution control panel 1 according to the present invention includes a base body 7 made of a translucent resin and a plurality of convex portions 2 formed on a surface of base body 7. The plurality of convex portions 2 are formed to extend in parallel to one another. It is noted that the plurality of convex portions 2 may each be formed to extend linearly. A cross section in a direction perpendicular to a direction in which convex portion 2 extends has a triangular outline as shown in Fig. 2. It is assumed that angle β indicates an angle in one corner portion 4 of one convex portion 2. In addition, it is assumed that angle α indicates an angle in the other corner portion 3 located opposite to above one corner portion 4 of convex portion 2. It is assumed that one side surface 6 indicates a side surface of convex portion 2 located between one corner portion 4 and the apical angle. In addition, it is assumed that the other side surface 5 indicates the other side surface of convex portion 2 located between the other corner portion 3 and the apical angle. It is assumed that pitch P indicates a distance between one corner portion 4 and the other corner portion 3 in one convex portion 2. In addition, it is assumed that thickness T indicates the thickness of base body 7.

The characteristic configuration of above light distribution control panel 1 is summarized as follows: light distribution control panel 1 includes base body 7 serving as a plate-like or sheet-like base material made of a translucent material, and base body 7 has the plurality of convex portions 2 serving as convexly-shaped portions for light distribution control formed on one surface opposite to the light source (a backlight 11) side of base body 7. The plurality of convex portions 2 are positioned to extend in parallel to one another as shown in Fig. 1. Light distribution control panel 1 includes a light transmission/reflection suppressing portion (a surface of one side surface 6 having higher roughness than that of a surface of the other side surface 5) for suppressing emission, from at least a part (one side surface 6) of a surface of convex portion 2, of light incident from a surface of base body 7 on the light source side. In other words, the light transmission/reflection suppressing portion (the surface of one side surface 6 having higher roughness than that of the surface of the other side surface 5) suppresses light transmission or reflection from the side surface (one side surface 6) that is continuous with any one (one corner portion 4) of the two corner portions (one corner portion 4 and the other corner portion 3) located at a boundary portion between convex portion 2 and the surface of base body 7 in the cross section.

The plurality of convex portions 2 each has a triangle-like cross-sectional shape in the direction perpendicular to the direction in which convex portion 2 extends. Although convex portion 2 may have a triangular cross-sectional shape as shown in Fig. 1, at least one of one side surface 6 and the other side surface 5 may have a curved portion. Even in such a case, convex portion 2 has three corner portions of one corner portion 4, the other corner portion 3 and the apical angle, and thus, convex portion 2 is described as having the triangle-like shape. It is noted that the triangle-like shape herein refers to the cross-sectional shape in which there are three corner portions in the cross section of convex portion 2 as described above, and one of one side surface 6 and the other side surface 5 may include a curved portion, a concave portion, a convex portion, and the like.

Base body 7 has a refractive index of 1.4 or more and 1.6 or less. Light distribution control panel 1 has a light transmittance of 70% or more. In convex portion 2, the other corner portion 3 that is the other corner portion of the two corner portions located at the boundary portion between convex portion 2 and the surface of base body 7 in the above cross section has angle $\alpha$ of 5° or more and 40° or less, and one corner portion 4 that is one corner portion has angle $\beta$ of 60° or more and 90° or less. The ratio (A/B) between roughness A of one side surface 6 that is continuous with one corner portion 4 in the surface of convex portion 2 and roughness B of the other side surface 5 that is continuous with the other corner portion 3 in the surface of convex portion 2 is 3 or more and 3000 or less.

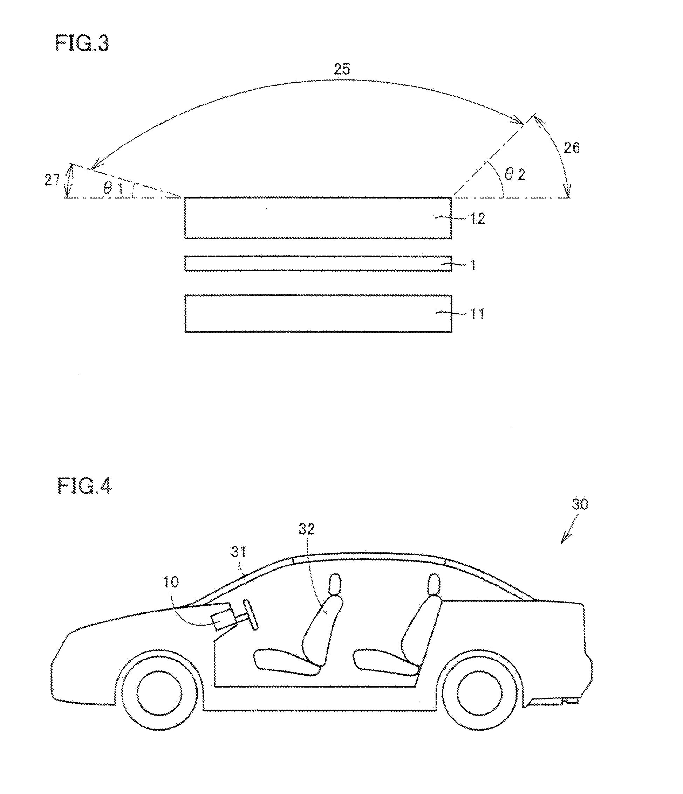

With such a configuration, in the direction perpendicular to the direction in which convex portion 2 in light distribution control panel 1 extends, the light distribution (luminance distribution) of light passing through and emitted from light distribution control panel 1 can be controlled to be different on the right and left sides as shown in Fig. 3 that will be described later. In addition, a decrease in intensity of light passing through light distribution control panel 1 can be suppressed, as compared with a configuration in which light traveling toward a region that should form a low luminance region is simply blocked.

In above light distribution control panel 1, pitch P that is the width of convex portion 2 in the direction perpendicular to the direction in which convex portion 2 extends is 20 μm or more and 500 μm or less. Preferably, pitch P is set to 100 μm or less. In this case, assuming that light distribution control panel 1 is, for example, applied to a display device 10 for mounting on the mobile unit as will be described later, recognition by human beings of the presence of convex portion 2 and an uncomfortable feeling about displayed contents can be suppressed as for light that has passed through light distribution control panel 1. This is because the width (pitch P) of convex portion 2 can be reduced to be less than or equal to the resolution of the human eye.

In addition, when above pitch P is set to 100 μm or less, human beings hardly recognize the presence of convex portion 2, and thus, the above effect can be reliably obtained.

Next, a method for manufacturing above light distribution control panel 1 by molding through the use of a die will be described hereinafter.

In the method for manufacturing light distribution control panel 1, a die having a concave portion corresponding to the surface shape of light distribution control panel 1 formed therein is first prepared. A thin film made of a resin that will configure light distribution control panel 1 is set between this die and an opposite surface plate. In this state, the thin film made of a resin is heated. Thereafter, molding is performed by pressing the heated thin film made of a resin to be sandwiched by the die and the opposite surface plate. After cooled, the thin film made of a resin is removed from the die. As a result, light distribution control panel 1 shown in Fig. 1 and the like is obtained.

As a method for heating the thin film made of a resin, a method for sandwiching the thin film made of a resin between the die and the opposite surface plate and then heating the thin film made of a resin, a method for heating only the thin film made of a resin in a non-contact state in advance, and the like can be arbitrarily employed. The thin film made of a resin can be heated by a heater and the like placed directly below the die and the opposite surface plate. The thin film made of a resin, however, can also be heated by using a heating function introduced into the die and the opposite surface plate (the heater and the like is placed inside the die and the opposite surface plate).

The thin film made of a resin is preferably heated to be higher than or equal to a temperature at which the resin starts to be liquefied. The thin film made of a resin is heated to be higher than or equal to the temperature at which the resin starts to be liquefied as described above, and then, is subjected to pressurization processing to press the thin film made of a resin by the die and the opposite surface plate. As a result, by using the phenomenon where the resin is liquefied, the shape of the concave portion formed in a surface of the die can be transferred to a surface of the thin film made of a resin. In such a manner, light distribution control panel 1 according to the present invention can be manufactured.

The use, as the resin that will configure light distribution control panel 1, of a resin that melts in a relatively narrow temperature range and rapidly cures when cooled is preferable because the throughput is increased. Accordingly, polycarbonate, polyimide, polymethylmethacrylate, polyether sulfone, polysulfone, polyetherimide, and the like are suitable. Although the thickness of the thin film made of a resin is not particularly limited, the thickness is preferably set to 20 $\mu$m or more, and more preferably 100 $\mu$m or more.

The die used to form light distribution control panel 1 can be manufactured by using any conventionally well-known methods. For example, the die can be manufactured by using a method including the steps of: forming a resin die by molding; forming a layer made of a metallic material on the resin die on a substrate by plating; and removing the resin die.

At this time, a parent die used in the step of forming the resin die by molding can be manufactured by, for example, machining. Specifically, a thick NiP (nickel phosphorus)-plated layer is formed on a base plate, for example. Then, a surface of the plated layer is subjected to cutting processing by a cutting tool having a tip shape corresponding to the surface shape of light distribution control panel 1 (cross-sectional shape of convex portion 2). In such a manner, the above parent die can be formed. As the parent die, a precise microstructure can be used. In this case, a child die manufactured by the parent die is also a precise microstructure. Therefore, minute molding with high dimensional accuracy can be performed on the thin film made of a resin. In addition, because of molding through the use of the die, a molded body can be integrally molded with good reproducibility. Furthermore, the surface roughness (Ra) of the molded body can also be suppressed to 10 nm or less.

The method for manufacturing the die by using the above molding will be specifically described hereinafter. First, by using the die (parent die) having a convex portion, molding such as injection molding is performed to manufacture the resin die having a concave-convex portion. The resin die is made of polymethylmethacrylate, polypropylene, polycarbonate, or the like. Next, a conductive substrate is formed to cover a top portion of the resin die, and then, the resin die is polished or ground. As a result of this polishing or grinding, a base portion of the resin die is removed, thereby achieving a state where a pattern made of the resin is formed on a surface of the conductive substrate. In other words, the resin die having the conductive substrate as a base is formed.

Thereafter, by using the conductive substrate as a plating electrode, electroforming is performed to deposit the metallic material layer on the resin die. A prescribed thickness of the metallic material layer is obtained by polishing or grinding as required, and then, the resin die is removed by wet etching or plasma ashing. As a result, the die having the conductive substrate as the base and having the metallic material layer formed on the surface of the conductive substrate in a prescribed pattern is obtained. In this die, the conductive substrate is used as the seat (base) of the die, and thus, the electroforming time required to form the seat can be saved. In addition, since the seat is not formed by electroforming, only a small amount of warpage occurs in the die due to internal stress.

The above die can also be manufactured by using another method. The method will be specifically described hereinafter.

First, by using the die (parent die) having the convex portion, molding is performed to manufacture the resin die. Next, the metallic material layer is formed on the resin die by electroless plating. Thereafter, the resin die is removed by wet etching or plasma ashing. As a result, the die is obtained.

Light distribution control panel 1 shown in Figs. 1 and 2 is used in such a manner that the side where convex portion 2 is formed is positioned opposite to the side that faces backlight 11 serving as the light source portion of the display device. More specifically, light distribution control panel 1 is used in display device 10 as shown in Fig. 3. A structure of display device 10 will be described with reference to Fig. 3.

As shown in Fig. 3, display device 10 includes backlight 11 serving as the light source, a display unit 12, and light distribution control panel 1 positioned between these backlight 11 and display unit 12. As shown in Fig. 2, light distribution control panel 1 is positioned such that convex portion 2 thereof is located opposite to the side that faces backlight 11 (that is, on the display unit 12 side). In other words, light distribution control panel 1 is positioned on backlight 11, and display unit 12 is mounted on light distribution control panel 1.

Backlight 11 may be configured such that a diffusing plate and a luminance assisting film are positioned on the light distribution control panel 1 side. In addition, an LCD unit, for example, can be used as display unit 12. The LCD unit includes, for example, a liquid crystal cell, a phase difference plate positioned on each of the front surface and the back surface of the liquid crystal cell, and a polarizing plate positioned on the outer circumferential surface of each phase difference plate. The liquid crystal cell has a structure in which liquid crystals and a thin-film transistor for driving the liquid crystals are positioned between two substrates of glass positioned to face each other with a spacer interposed therebetween. It is noted that a unit having another configuration may be used as display unit 12 if the unit passes and uses light from backlight 11. In addition, as a different arrangement of light distribution control panel 1, light distribution control panel 1 may be positioned on display unit 12 (on a surface of display unit 12 opposite to a surface (back surface) on the backlight 11 side.

With such a configuration, by appropriately adjusting the shape of convex portion 2 (see Fig. 2) of light distribution control panel 1 (specifically, angle $\alpha$, angle $\beta$, pitch P, and the surface roughness of one side surface 6 and the other side surface 5, and the like), the light intensity distribution in the direction intersecting the direction in which convex portion 2 extends can be controlled. Therefore, the range of low luminance regions 26 and 27 (values of angles $\theta 1$ and $\theta 2$) where the proportion of the luminance relative to the luminance at the front of display device 10 achieves, for example, a prescribed value (e.g., 0.3 or less) can be made different on the opposite end sides in the direction intersecting the direction in which convex portion 2 extends. Specifically, as shown in Fig. 3, angle $\theta 2$ indicating the distribution range of low luminance region 26 can be made larger than angle $\theta 1$ indicating the distribution range of the other low luminance region 27. It is noted that in Fig. 3, a region exhibiting a luminance larger than the above prescribed relative luminance value is indicated as a luminance ensuring region 25.

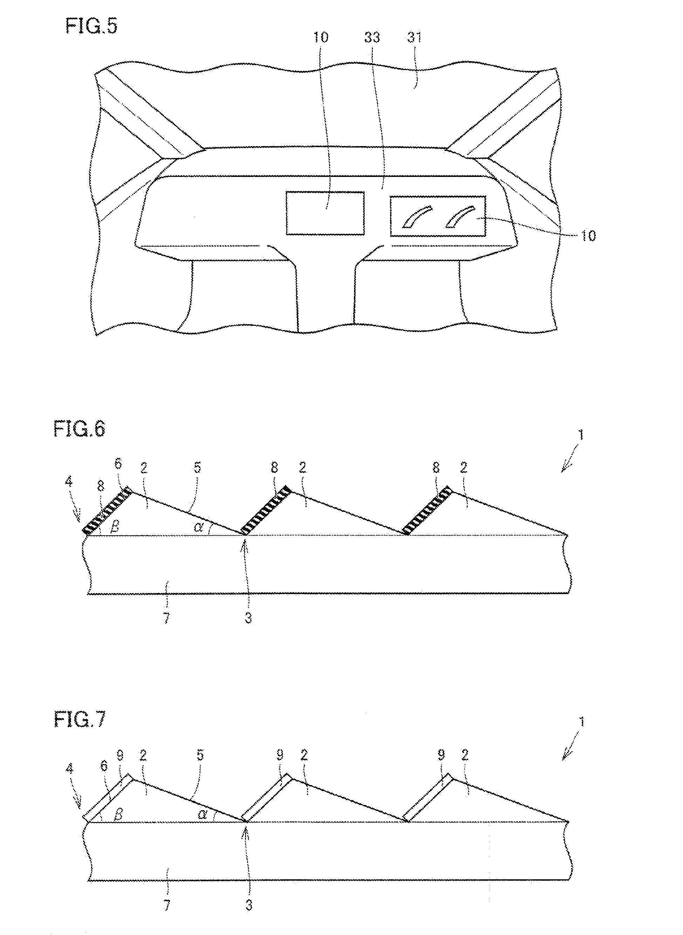

Display device 10 shown in Fig. 3 is a display device for mounting on a mobile unit mounted on a vehicle 30 that is one example of the mobile unit, as shown in Figs. 4 and 5, for example. Vehicle 30 on which display device 10 according to the present invention shown in Fig. 3 is mounted will be described with reference to Figs. 4 and 5.

Referring to Figs. 4 and 5, in vehicle 30, a windshield 31 for driver's forward checking is positioned in the front portion of the compartment. A dashboard 33 is positioned under windshield 31. Display device 10 is positioned at a portion of dashboard 33 that faces a seat 32. Display device 10 includes, for example, a display unit of a car navigation system, a display unit that displays information related to vehicle driving such as a speed meter, and the like. In display device 10 mounted on vehicle 30, convex portion 2 of light distribution control panel 1 is positioned to extend in the horizontal direction and the shape of convex portion 2 is controlled. Thus, reflection of contents displayed by display device 10 on windshield 31 can be suppressed. In other words, as shown in Fig. 4, in vehicle 30 serving as the mobile unit, display device 10 is positioned at a site adjacent to windshield 31 serving as the glass surface, and display device 10 is positioned such that the direction perpendicular to the direction in which convex portion 2 (see Fig. 2) of light distribution control panel 1 that configures display device 10 extends faces windshield 31. In such a manner, low luminance region 26 having a reduced luminance of light emitted from display device 10 is located on the windshield 31 side of display device 10 shown in Fig. 4, and thus, the luminance of light emitted from display device 10 to the windshield 31 side can be reduced. As a result, reflection of contents displayed by display device 10 on windshield 31 can be lessened.

(Second Embodiment)

A second embodiment of the light distribution control panel according to the present invention will be described with reference to Fig. 6.

Light distribution control panel 1 shown in Fig. 6 has a structure basically similar to that of the light distribution control panel shown in Figs. 1 and 2. Light distribution control panel 1 shown in Fig. 6 is, however, different from the light distribution control panel shown in Figs. 1 and 2 in that a black film 8 is formed on the surface of one side surface 6 of convex portion 2 formed on one surface opposite to the light source (e.g., backlight 11 shown in Fig. 2) side of base body 7. With such a configuration as well, the effect similar to that of the light distribution control panel shown in Figs. 1 and 2 can be obtained. In other words, above light distribution control panel 1 shown in Fig. 6 includes, as a light transmission suppressing portion, black film 8 serving as a light absorbing layer formed on one side surface 6 that is continuous with one corner portion 4. Therefore, black film 8 can absorb at least a part of light emitted from one side surface 6, and thus, the luminance of light in a direction in which the light emitted from this one side surface 6 is released can be reduced. As a result, in this direction, the viewing angle of a region that forms low luminance region 26 (see Fig. 3) can be effectively increased.

Convex portion 2 of light distribution control panel 1 shown in Fig. 6 can have a shape basically similar to that of convex portion 2 of light distribution control panel 1 shown in Figs. 1 and 2.

Next, a method for manufacturing light distribution control panel 1 shown in Fig. 6 will be briefly described. The light distribution control panel shown in Fig. 6 can be manufactured by using a manufacturing method basically similar to the method for manufacturing the light distribution control panel shown in Figs. 1 and 2. In addition, black film 8 can be formed by using a method such as lithography.

A modification of the light distribution control panel shown in Fig. 6 will be described with reference to Fig. 7.

Light distribution control panel 1 shown in Fig. 7 has a structure basically similar to that of the light distribution control panel shown in Fig. 6. Light distribution control panel 1 shown in Fig. 7, however, includes, as the film formed on one side surface 6, a different refractive index layer 9 having a refractive index different from that of the material that configures convex portion 2, instead of black film 8 shown in Fig. 6. With such a configuration as well, the effect similar to that of the light distribution control panel shown in Fig. 6 can be obtained. In other words, the light distribution control panel shown in Fig. 7 may include, as the light transmission suppressing portion, different refractive index layer 9 formed on one side surface 6 that is continuous with one corner portion 4 and having a refractive index different from that of the material that configures convex portion 2. In this case, by adjusting the refractive index of different refractive index layer 9, the emission direction of light emitted from one side surface 6 can be changed. Therefore, the luminance of light in the direction in which light emitted from this one side surface 6 is released when different refractive index layer 9 is not present can be reduced. As a result, in this direction, the viewing angle of the region that forms low luminance region 26 (see Fig. 3) can be effectively increased.

It is noted that light distribution control panel 1 shown in Fig. 7 can be manufactured by using a manufacturing method basically similar to the method for manufacturing the light distribution control panel shown in Fig. 6. In addition, convex portion 2 of light distribution control panel 1 shown in Fig. 7 can have a shape basically similar to that of convex portion 2 of light distribution control panel 1 shown in Figs. 1 and 2.

(Third Embodiment)

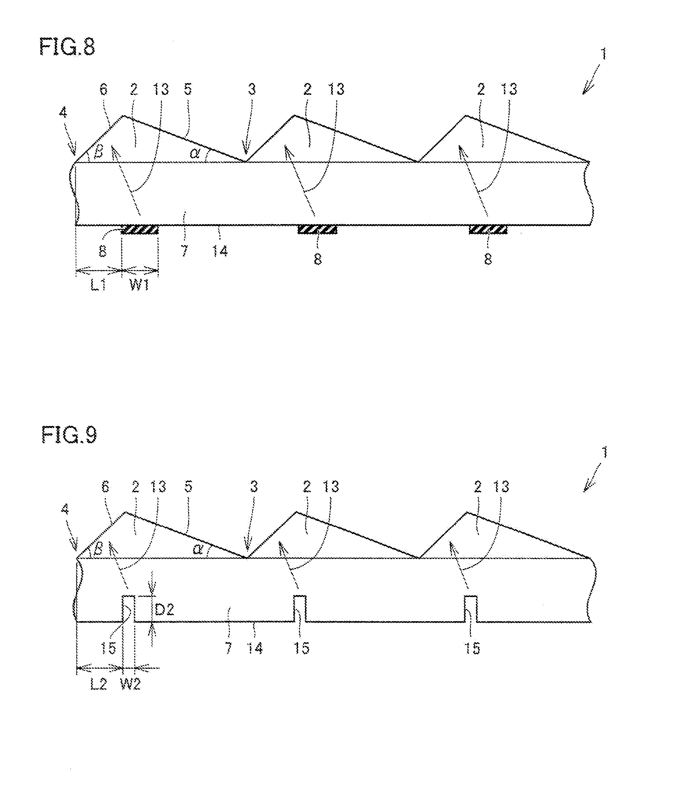

A third embodiment of the light distribution control panel according to the present invention will be described with reference to Fig. 8.

Light distribution control panel 1 shown in Fig. 8 has a structure basically similar to that of light distribution control panel 1 shown in Figs. 1 and 2. Light distribution control panel 1 shown in Fig. 8 is, however, different from light distribution control panel 1 shown in Figs. 1 and 2 in that black film 8 for blocking light that travels toward one side surface 6 as indicated by an arrow 13 is formed on a light source side surface 14 that is a back surface of base body 7, located opposite to the surface of base body 7 on the side where convex portion 2 is formed. Black film 8 is linearly formed to extend along one side surface 6. In addition, an end of black film 8 is at a distance L1 from a position on the back surface of base body 7 located directly below one corner portion 4 of convex portion 2. Furthermore, black film 8 has a width W1. These distance L1 and width W1 are appropriately adjusted, depending on the thickness of base body 7, the refractive index of the material that configures base body 7 and convex portion 2, and the like. With such a configuration as well, the effect similar to that of the light distribution control panel shown in Figs. 1 and 2 can be obtained. In other words, light distribution control panel 1 includes, as the light transmission suppressing portion, black film 8 serving as a light source side light absorbing layer formed on light source side surface 14, to block at least a part of a path of light emitted from one side surface 6, of light incident from light source side surface 14 to base body 7 when light source side surface 14 of base body 7 is flat. In this case, black film 8 can absorb at least a part of light to be incident to one side surface 6. Therefore, the luminance of light in the direction in which light emitted from this one side surface 6 is released can be reduced. As a result, in this direction, the viewing angle of the region that forms low luminance region 26 (see Fig. 3) can be effectively increased.

Convex portion 2 of light distribution control panel 1 shown in Fig. 8 can have a shape basically similar to that of convex portion 2 of light distribution control panel 1 shown in Figs. 1 and 2. In addition, a black matrix material for liquid crystals, for example, can be used as black film 8. Furthermore, distance L1 can be set to a value of 10 μm, for example, and width W1 can be set to a value of 20 μm, for example.

It is noted that light distribution control panel 1 shown in Fig. 8 can be manufactured by using a method for forming black film 8 by lithography, a printing method and the like on light source side surface 14 of the light distribution control panel having convex portion 2 formed thereon that is manufactured by using the method for manufacturing light distribution control panel 1 shown in Figs. 1 and 2.

A modification of the light distribution control panel shown in Fig. 8 will be described with reference to Fig. 9.

Light distribution control panel 1 shown in Fig. 9 has a structure basically similar to that of light distribution control panel 1 shown in Fig. 8. Light distribution control panel 1 shown in Fig. 9 is, however, different from light distribution control panel 1 shown in Fig. 8 in that a structure formed in light source side surface 14 of base body 7 is a groove 15, not black film 8. A plurality of grooves 15 are formed to extend linearly along one side surface 6 of convex portion 2 in light source side surface 14 of base body 7. Groove 15 is formed at a position where light incident to one side surface 6 as indicated by arrow 13 is decreased. A distance L2 between groove 15 and a position on light source side surface 14 located directly below one corner portion 4 of convex portion 2, a width W2 of groove 15 and a depth D2 of groove 15 are appropriately set, depending on the shape, the material and the like of light distribution control panel 1. With such a configuration as well, the effect similar to that of the light distribution control panel shown in Fig. 8 can be obtained. In other words, light distribution control panel 1 shown in Fig. 9 includes, as the light transmission suppressing portion, groove 15 formed in light source side surface 14, to intersect a path of light emitted from one side surface 6, of light incident from light source side surface 14 to base body 7 when light source side surface 14 of base body 7 is flat. In this case, at least a part of light to be incident to one side surface 6 can be reflected or refracted on a side surface of groove 15. Therefore, the luminance of light in the direction in which light emitted from this one side surface 6 is released can be reduced. As a result, in this direction, the viewing angle of the region that forms the low luminance region can be effectively increased.

Convex portion 2 of light distribution control panel 1 shown in Fig. 9 can have a shape basically similar to that of convex portion 2 of light distribution control panel 1 shown in Figs. 1 and 2. In addition, as for groove 15, width W2 can be set to 10 μm, depth D2 can be set to 20 μm, and distance L2 can be set to 15 μm.

It is noted that light distribution control panel 1 shown in Fig. 9 can be manufactured by using a method basically similar to the method for manufacturing the light distribution control panel shown in Figs. 1 and 2. For example, a die having a concave portion corresponding to convex portion 2 of light distribution control panel 1 formed therein is first prepared. In addition, an opposite surface plate having a linear convex portion corresponding to the shape of groove 15 shown in Fig. 9 formed thereon is prepared. Then, the thin film made of a resin that will configure light distribution control panel 1 shown in Fig. 9 is set between these die and opposite surface plate. In this state, the thin film made of a resin is heated. Thereafter, molding is performed by pressing the heated thin film made of a resin to be sandwiched by the die and the opposite surface plate. After cooled, the thin film made of a resin is removed from the die. As a result, light distribution control panel 1 shown in Fig. 9 is obtained.

(Fourth Embodiment)

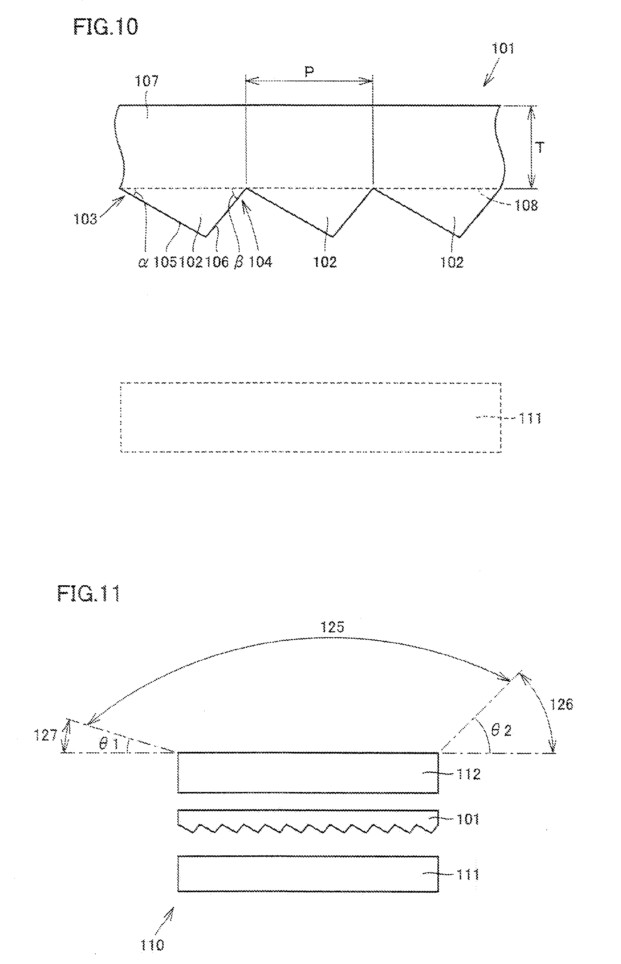

A light distribution control panel 101 according to the present invention will be described with reference to Fig. 10.

As shown in Fig. 10, light distribution control panel 101 according to the present invention includes a base body 107 made of a translucent resin and a plurality of convex portions 102 formed on a surface of base body 107. The plurality of convex portions 102 are formed to extend in parallel to one another. It is noted that the plurality of convex portions 102 may be formed to extend linearly in a direction perpendicular to the sheet of Fig. 1. In addition, convex portion 102 on the surface of base body 107 can have any two-dimensional shape such as a linear shape, a shape having a bended portion somewhere in the middle, and the like. A cross section in a direction perpendicular to a direction in which convex portion 102 extends has a triangular outline as shown in Fig. 10. It is assumed that angle α indicates an angle in the other corner portion 103 of one convex portion 102. In addition, it is assumed that angle β indicates an angle in one corner portion 104 located opposite to the above other corner portion 103 of convex portion 102. It is assumed that the other side surface 105 indicates a side surface of convex portion 102 located between the other corner portion 103 and the apical angle. In addition, it is assumed that one side surface 106 indicates the other side surface of convex portion 102 located between one corner portion 104 and the apical angle. It is assumed that pitch P indicates a distance between the other corner portion 103 and one corner portion 104 in one convex portion 102. In addition, it is assumed that thickness T indicates the thickness of base body 107.

The characteristic configuration of above light distribution control panel 101 is summarized as follows:

light distribution control panel 101 includes base body 107 serving as a plate-like or sheet-like base material made of a translucent material, and base body 107 has the plurality of convex portions 102 serving as a linear and convexly-shaped portion for light distribution control formed on one surface on the light source (a backlight 111) side of base body 107. The plurality of convex portions 102 are positioned to extend in parallel to one another, and each convex portion 102 has a triangle-like cross-sectional shape in the direction perpendicular to the direction in which convex portion 102 extends. Although convex portion 102 may have a triangular cross-sectional shape as shown in Fig. 1, at least one of the other side surface 105 and one side surface 106 may have a curved portion. Even in such a case, convex portion 102 has three corner portions of the other corner portion 103, one corner portion 104 and the apical angle, and thus, convex portion 102 is described as having the triangle-like shape. It is noted that the triangle-like shape herein refers to the cross-sectional shape in which there are three corner portions in the cross section of convex portion 102 as described above, and one of the other side surface 105 and one side surface 106 may include a curved portion, a concave portion, a convex portion, and the like. Base body 107 has a refractive index of 1.4 or more and 1.6 or less. Light distribution control panel 101 has a light transmittance of 70% or more. In convex portion 102, the other corner portion 103 that is the other corner portion of the two corner portions located at the boundary portion between convex portion 102 and the surface of base body 107 in the above cross section has angle α of 5° or more and 40° or less, and one corner portion 104 that is one corner portion has angle β of 60° or more and 90° or less. The ratio (A/B) between roughness A of the other side surface 105 that is continuous with the other corner portion 103 in the surface of convex portion 102 and roughness B of one side surface 106 that is continuous with one corner portion 104 in the surface of convex portion 102 is 3 or more and 3000 or less.

With such a configuration, in the direction perpendicular to the direction in which convex portion 102 in light distribution control panel 101 extends, the light distribution (luminance distribution) of light passing through and emitted from light distribution control panel 101 can be controlled to be different on the right and left sides as shown in Fig. 11 that will be described later. In addition, a decrease in intensity of light passing through light distribution control panel 101 can be suppressed, as compared with the configuration in which light traveling toward the region that should form the low luminance region is simply blocked.

In above light distribution control panel 101, pitch P that is the width of convex portion 102 in the direction perpendicular to the direction in which convex portion 102 extends is 20 μm or more and 500 μm or less. Preferably, pitch P is set to 100 μm or less. In this case, assuming that light distribution control panel 101 is, for example, applied to a display device 110 for mounting on the mobile unit as will be described later, recognition by human beings of the presence of convex portion 102 and an uncomfortable feeling about displayed contents can be suppressed as for light that has passed through light distribution control panel 101. This is because the width (pitch P) of convex portion 102 can be reduced to be less than or equal to the resolution of the human eye. In addition, when above pitch P is set to 100 $\mu$m or less, human beings hardly recognize the presence of convex portion 102, and thus, the above effect can be reliably obtained.

Light distribution control panel 101 shown in Fig. 10 is used in such a manner that the side where convex portion 102 is formed is positioned on the backlight 111 side serving as the light source portion of the display device. More specifically, light distribution control panel 101 is used in display device 110 as shown in Fig. 11. A structure of display device 110 will be described with reference to Fig. 11.

As shown in Fig. 11, display device 110 includes backlight 111 serving as the light source, a display unit 112, and light distribution control panel 101 positioned between these backlight 111 and display unit 112. Light distribution control panel 101 is positioned such that convex portion 102 thereof faces the backlight 111 side. In other words, light distribution control panel 101 is positioned on backlight 111, and display unit 112 is mounted on light distribution control panel 101. Backlight 111 may be configured such that a diffusing plate and a luminance assisting film are positioned on the light distribution control panel 101 side. In addition, the LCD unit, for example, can be used as display unit 112. The LCD unit includes, for example, a liquid crystal cell, a phase difference plate positioned on each of the front surface and the back surface of the liquid crystal cell, and a polarizing plate positioned on the outer circumferential surface of each phase difference plate. The liquid crystal cell has a structure in which liquid crystals and a thin-film transistor for driving the liquid crystals are positioned between two substrates of glass positioned to face each other with a spacer interposed therebetween. It is noted that a unit having another configuration may be used as display unit 112 if the unit passes and uses light from backlight 111.

In addition, as an arrangement of light distribution control panel 101, a different arrangement may be employed (e.g., a configuration in which light distribution control panel 101 is positioned on display unit 112 (on a surface of display unit 112 opposite to a side that faces backlight 111)).

With such a configuration, by appropriately adjusting the shape of convex portion 102 (see Fig. 1) of light distribution control panel 101 (specifically, angle $\alpha$, angle $\beta$, pitch P, and the surface roughness of the other side surface 105 and one side surface 106, and the like), the light intensity distribution in the direction intersecting the direction in which convex portion 102 extends can be controlled. Therefore, the range of low luminance regions 126 and 27 (values of angles $\theta 1$ and $\theta 2$) where the pro-

portion of the luminance relative to the luminance at the front of display device 110 achieves, for example, a prescribed value (e.g., 0.3 or less) can be made different on the opposite end sides in the direction intersecting the direction in which convex portion 102 extends. Specifically, as shown in Fig. 11, angle $\theta 2$ indicating the distribution range of low luminance region 126 can be made larger than angle $\theta 1$ indicating the distribution range of the other low luminance region 127. It is noted that in Fig. 11, a region exhibiting a luminance larger than the above prescribed relative luminance value is indicated as a luminance ensuring region 125.

Display device 110 shown in Fig. 11 is a display device for mounting on a mobile unit mounted on vehicle 30 that is one example of the mobile unit, as shown in Figs. 4 and 5, for example. Vehicle 30 on which display device 110 according to the present invention shown in Fig. 11 is mounted will be described with reference to Figs. 4 and 5.

Referring to Figs. 3 and 4, as already described, in vehicle 30, windshield 31 for driver's forward checking is positioned in the front portion of the compartment. Dashboard 33 is positioned under windshield 31. Display device 110 is positioned at a portion of dashboard 33 that faces seat 32. Display device 110 includes, for example, a display unit of the car navigation system, a display unit that displays information related to vehicle driving such as a speed meter, and the like. In display device 110 mounted on vehicle 30, convex portion 102 of light distribution control panel 101 is positioned to extend in the horizontal direction and the shape of convex portion 102 is controlled. Thus, reflection of contents displayed by display device 110 on windshield 31 can be suppressed. In other words, as shown in Fig. 11, in vehicle 30 serving as the mobile unit, display device 110 is positioned at a site adjacent to windshield 31 serving as the glass surface, and display device 110 is positioned such that the direction perpendicular to the direction in which convex portion 102 of light distribution control panel 101 that configures display device 110 extends faces windshield 31. In such a manner, low luminance region 126 having a reduced luminance of light emitted from display device 110 is located on the windshield 31 side of display device 110 shown in Fig. 5, and thus, the luminance of light emitted from display device 110 to the windshield 31 side can be reduced. As a result, reflection of contents displayed by display device 110 on windshield 31 can be lessened.

(Example)

The following simulation experiment was carried out to check the effect of the light distribution control panel according to the present invention.

(As to Experimental System)

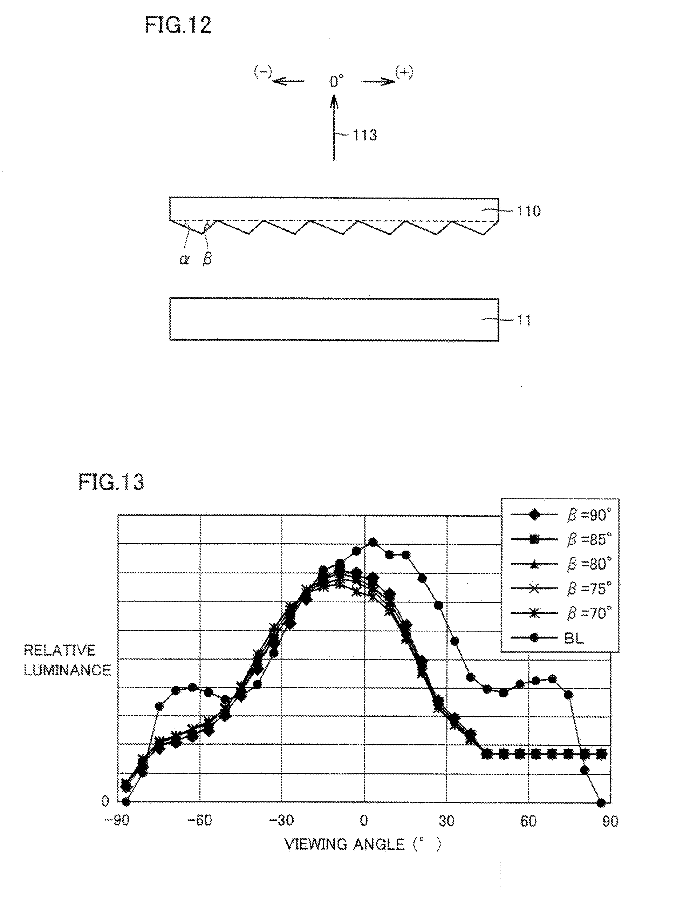

As a system assumed in the simulation experiment, an optical system was used in which light distribution control panel 101 according to the present invention was positioned such that convex portion 102 faced the front (light emitting side) of backlight 111 as shown in Fig. 12. Fig. 12 is a schematic diagram of the optical system used for simulation. Angle $\alpha$ of the other corner portion and angle $\beta$ of one corner portion of convex portion 102 in light distribution control panel 101 were made different, and the relative luminance was calculated for each viewing angle of light emitted through light distribution control panel 101 in a direction indicated by an arrow 113. It is noted that as shown in Fig. 12, the viewing angle in the right direction with respect to arrow 113 was defined as "+" and the viewing angle in the left direction with respect to arrow 113 was defined as "-."

Specifically, angle $\beta$ of one corner portion was changed to 30°, 75°, 80°, 85°, and 90° with angle $\alpha$ of the other corner portion fixed and with angle $\alpha$ of the other corner portion set to 15°, 20°, 25°, and 30°.

It is noted that the refractive index of the material that configured the light distribution control panel was set to 1.53. In addition, thickness T of base body 107 (see Fig. 10) of the light distribution control panel was set to 200 $\mu$m. Furthermore, pitch P that was the width of convex portion 102 (see Fig. 10) was set to 100 $\mu$m. Moreover, roughness Ra of the other side surface 105 was set to 5 nm, and roughness Ra of one side surface 106 was set to 1500 nm.

(Details of Simulation)

The viewing angle distribution of the relative luminance was calculated for the optical systems in which light distribution control panels 101 having different convex portions 102 as described above were used.

(Results)

Figs. 13 to 16 are graphs showing the results of the above simulation. In Figs. 13 to 16, the horizontal axis indicates the viewing angle (unit: °) as seen from a central portion of light distribution control panel 101. For example, the viewing angle of 0° in the horizontal axis refers to the orientation as seen from the arrow 113 side shown in Fig. 12 (the front of light distribution control panel 101). In addition, in Figs. 13 to 16, the vertical axis indicates the relative luminance value.

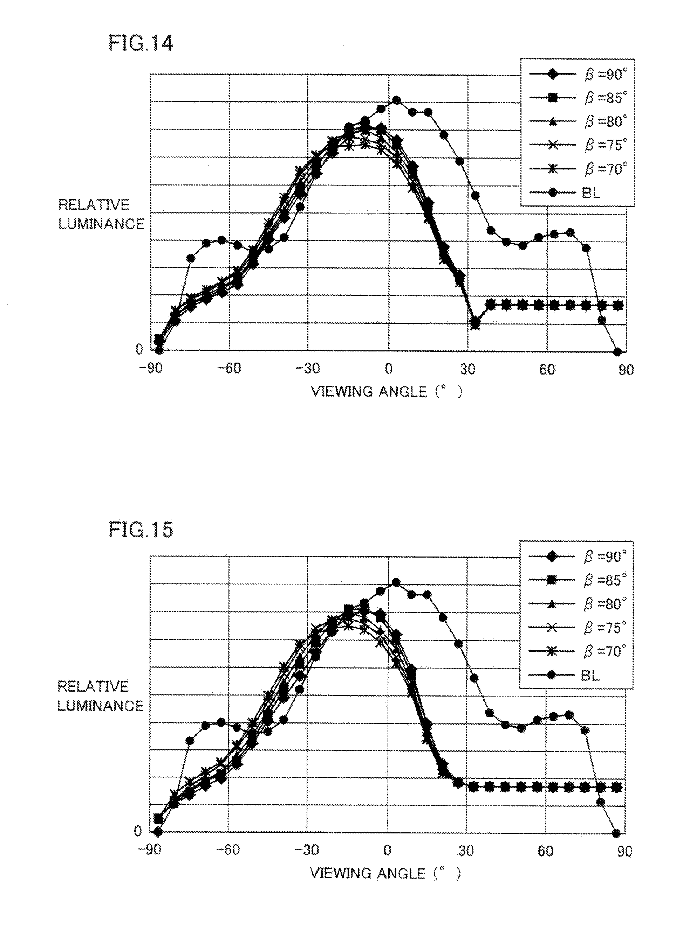

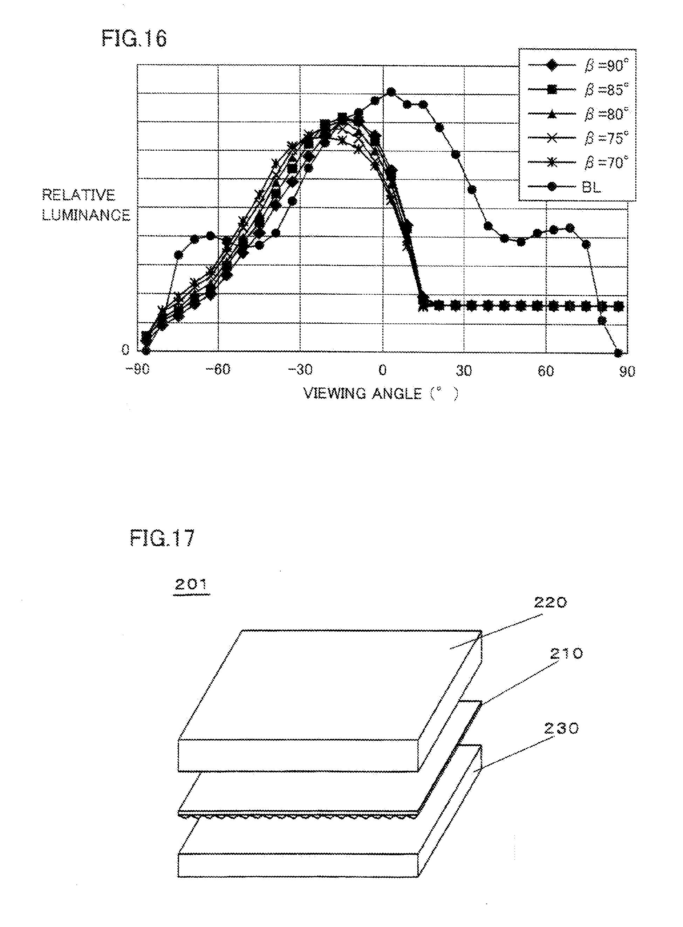

In Figs. 13 to 16, the black circle in the legends indicates the luminance distribution of light directly emitted from backlight 111, and the other legends indicate angle $\beta$ of the other corner portion. As shown in Fig. 13, it is found that when angle $\alpha$ is 15°, the relative luminance can be extremely decreased in a region where the viewing angle is larger than about 45°. As shown in Fig. 14, it is found that when angle $\alpha$ of the other corner portion is 20°, the relative luminance can be sufficiently lowered in a region where the viewing angle is larger than +35°. As shown in Fig. 15, when angle $\alpha$ of the other corner portion is 25°, the relative luminance can be lowered in a region where the viewing angle is larger than +30°. As shown in Fig. 16, when angle $\alpha$ of the other corner portion is 30°, the relative luminance can be lowered in a region where the viewing angle is larger than +20°. As described above, it is found that as angle $\alpha$ is increased, the range of the viewing angle where the relative luminance can be suppressed to be low expands. In addition, it is also found that as angle $\beta$ is decreased, the position of the peak of the relative luminance tends to move to the minus side of the viewing angle.

As described above, by controlling angle $\alpha$ of the other corner portion and angle $\beta$ of one corner portion, the range of the low luminance region can be changed. This result shows that according to the light distribution control panel of the present invention, the low luminance region having a range sufficient to suppress reflection on the glass surface in the display device for mounting on the mobile unit is obtained, and a decrease in luminance can be suppressed in the other region (luminance ensuring region).

(Fifth Embodiment)

A light distribution control panel 201 shown in Fig. 17 is also referred to as a panel-like light distribution control member, and is specifically a liquid crystal display panel. This light distribution control panel 201 includes a backlight 230 serving as the light source, a liquid crystal panel 220 that displays an image, and a light distribution control sheet 210 that controls light distribution of light from backlight 230 and emits the light toward liquid crystal panel 220.

Light distribution control sheet 10 has a linear convex portion 212 on one surface of a translucent plate-like or sheet-like base material 211, and is referred to as a so-called prism sheet or prism array. In light distribution control panel 201 shown in Fig. 17, light distribution control sheet 210 is positioned between backlight 230 and liquid crystal panel 220 such that convex portion 212 faces the backlight 230 side. In the present invention, however, light distribution control sheet 10 may be positioned on a display surface of liquid crystal panel 220 such that convex portion 212 faces the liquid crystal panel 220 side. Configurations of backlight 230 and liquid crystal panel 220 are not particularly limited, and various types of known backlights and liquid crystal panels used in a conventional liquid crystal display panel are illustrated by way of example.

Linear convex portion 212 in the present invention refers to linearly-extending and elongated convex portion 212, and means that at least one, and preferably multiple convex portions 212 are disposed in parallel. Light distribution control panel 201 includes convex portion 212 having preferably the same length and width as the sheet width (corresponding to the depth of the sheet in the figure) as shown in Fig. 17. The length of convex portion 212 needs not necessarily to be the same as the sheet width, and is appropriately designed in accordance with the intended use thereof, for example, the structure of the backlight, and the like. In addition, light distribution control sheet 210 may have a region where base material 211 is exposed, on the periphery of base material 211. Preferably, adjacent convex portions 212 are positioned without any gap therebetween as shown in the figure. A gap may, however, be provided between adjacent convex portions 212, and adjacent convex portions 212 may be positioned at a regular spacing.

In this light distribution control sheet 210, base material 211 and convex portion 212 are integrally formed of a translucent material such as glass, a polycarbonate resin and a polyimide resin, for example. In particular, minute convex portion 212 is required to deal with an increase in resolution of liquid crystal panel 220. In order to achieve this, a resin material that allows transfer by using a die having a minute transfer pattern formed thereon is suitably used.

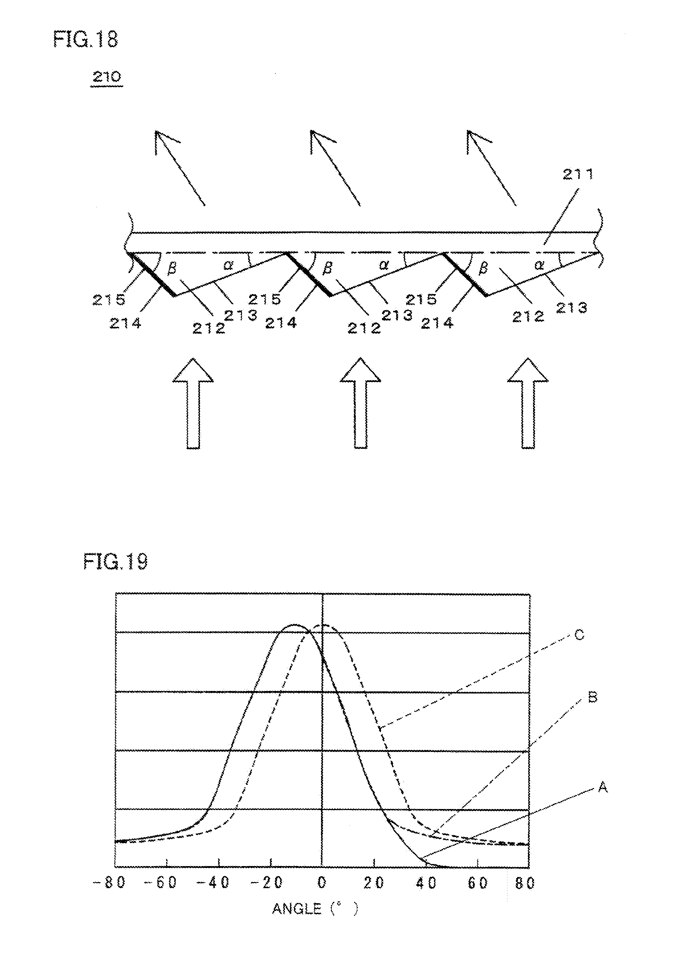

Light distribution control sheet 210 shown in Fig. 17 has a triangular side end surface (transverse section) as shown in Fig. 18, and has two light distribution control surfaces, that is, a first light distribution control surface 213 and a second light distribution control surface 214, on the side surface of light distribution control sheet 210. Angle α formed by first light distribution control surface 213 and a surface of base material 211 (hereinafter referred to as "base material surface") is different from angle β formed by second light distribution control surface 214 and the base material surface, and any one of angle α and angle β forms a right angle or an acute angle and the other forms an acute angle. For example, in light distribution control sheet 210 shown in Fig. 18, angle α formed by first light distribution control surface 213 and the base material surface is smaller than angle β formed by second light distribution control surface 214 and the base material surface.

Further, in light distribution control sheet 210 of the present invention, the light distribution control surface that forms a larger angle with respect to the base material surface, that is, second light distribution control surface 214 in the illustrated example includes a light control member 215. This light control member 215 suppresses light transmission and reflection of second light distribution control surface 214, and reduces the luminance in the unnecessary viewing angle. This light control member 215 is not particularly limited if light control member 215 is a film that suppresses transmission and reflection. For example, light control member 215 is formed of a black film that absorbs light in the visible region or an antireflective film such as a silicon oxide film. When light control member 215 is formed of the black film, light control member 215 may be formed by, for example, deposition of graphite. When light control member 215 is formed of the antireflective film, light control member 215 may be formed by, for example, sputtering silicon oxide. In addition, by forming the black film in a necessary region of the die having the above minute transfer pattern formed therein, the transfer pattern can also be transferred. As for this light control member 215, only a reduction in luminance in the unnecessary viewing angle is insufficient, and suppression of the luminance to almost zero is desired. Accordingly, the light diffusing surface as disclosed in Patent Document 2 is insufficient, and the black film that absorbs light or the antireflective film such as the silicon oxide film as described above is desirable. As a matter of course, any configuration is possible if light control member 215 can suppress the luminance in the unnecessary viewing angle to almost zero.

It is desirable to form this light control member 215 preferably all over second light distribution control surface 214. This light control member 215 may, however, be formed on a part of the region if light control member 215 can reduce the luminance in the unnecessary viewing angle, and desirably can suppress the luminance in the unnecessary viewing angle to almost zero.

Solid line A in Fig. 19 indicates the case where light distribution control sheet 210 of the present invention having light control member 215 provided all over second light distribution control surface 214 is used. Broken line C indicates the case where light distribution control sheet 210 is used in which angle α formed by first light distribution control surface 213 and the base material surface is equal to angle β formed by second light distribution control surface 214 and the base material surface (the case where light control member 215 is not present). Alternate long and short broken line B indicates the case where light distribution control sheet 210 is used in which angle α formed by first light distribution control surface 213 and the base material surface is different from angle β formed by second light distribution control surface 214 and the base material surface, and second light distribution control surface 214 does not have light control member 215. In Fig. 19, the vertical axis indicates the relative luminance, and the horizontal axis indicates the viewing angle from the front and indicates that light is emitted from first light distribution control surface 213 and in the direction of the negative viewing angle (the emission direction indicated by an arrow in Fig. 18).

As indicated by broken line C in Fig. 19, when angle α is equal to angle β, that is, in light distribution control sheet 210 having symmetrical first light distribution control surface 213 and second light distribution control surface 214, the luminance distribution that is symmetrical as seen from the front is obtained. By making angle α and angle β different, the luminance distribution shifts to any one side of the viewing angle, that is, the negative viewing angle side in the figure, as indicated by alternate long and short broken line B in the figure. In this case, however, as shown in the figure, the luminance in the positive viewing angle, that is, on the unnecessary viewing angle side is relatively high, and reflection on the windshield of the vehicle cannot be prevented sufficiently.

When second light distribution control surface 214 includes light control member 215 formed of a light blocking film or the antireflective film as in the present invention, a central axis of the luminance distribution shifts to one visual field side and light tailing to the other visual field side is cut, although the effect of cutting (shaping up) the spread of light as in the case where the louver film is used is not produced. In other words, when light distribution control sheet 10 having the structure shown in Fig. 18 is used, the luminance distribution shifts to the negative viewing angle, and in addition, the luminance can be reduced from the positive viewing angle, in particular small viewing angle, and the luminance in the viewing angle of, for example, 25° or 30° or more can be brought close to almost zero, as indicated by solid line A in Fig. 19. As a result, when light distribution control sheet 210 is used in the liquid crystal display panel in the car navigation system, unnecessary upward emission can be eliminated and reflection on the windshield can be prevented.

Angle $\alpha$ formed by first light distribution control surface 213 and the base material surface as well as angle $\beta$ formed by second light distribution control surface 214 and the base material surface are each appropriately set depending on the required light distribution characteristics. By changing these angle $\alpha$ and angle $\beta$, the viewing angle at which a dark region is formed, that is, the angle at which the luminance becomes almost zero can be adjusted. It is noted that the luminance in the viewing angle at which the luminance decreases tends to depend on the accuracy of formation of light control member 215, so to speak, the light transmission degree (light blocking degree) and the light reflection degree of light control member 215. By forming light control member 215 with good accuracy, the luminance in the unnecessary viewing angle approaches almost zero. When the light blocking performance and the light reflection performance of light control member 215 deteriorate, the luminance does not become zero. As can also be seen from the following simulation, in order to suppress the luminance to zero on the unnecessary viewing angle side, the smaller angle, that is, angle $\alpha$ formed by first light distribution control surface 213 and the base material surface is preferably set to 5° or more and 40° or less, and the larger angle, that is, angle $\beta$ formed by second light distribution control surface 214 and the base material surface is preferably set to 60° or more and less than 90°. By adjusting angle $\alpha$ and angle $\beta$ within this range, the luminance in the range of an angle (one side) larger than a desired viewing angle can be suppressed to almost zero.

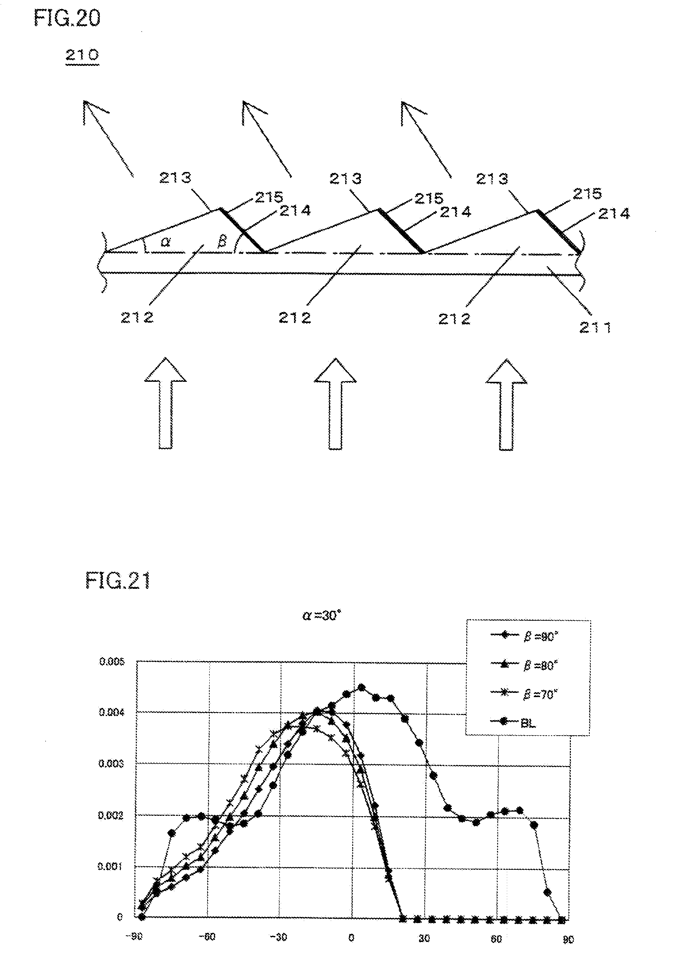

As a matter of course, in light distribution control sheet 210 of the present invention, convex portion 212 may be positioned not only on the light source side as shown in Fig. 18 but also on the side opposite to the light source side as shown in Fig. 20. In this case as well, light control member 215 is formed on second light distribution control surface 214 that forms large angle $\beta$ with respect to the base material surface.

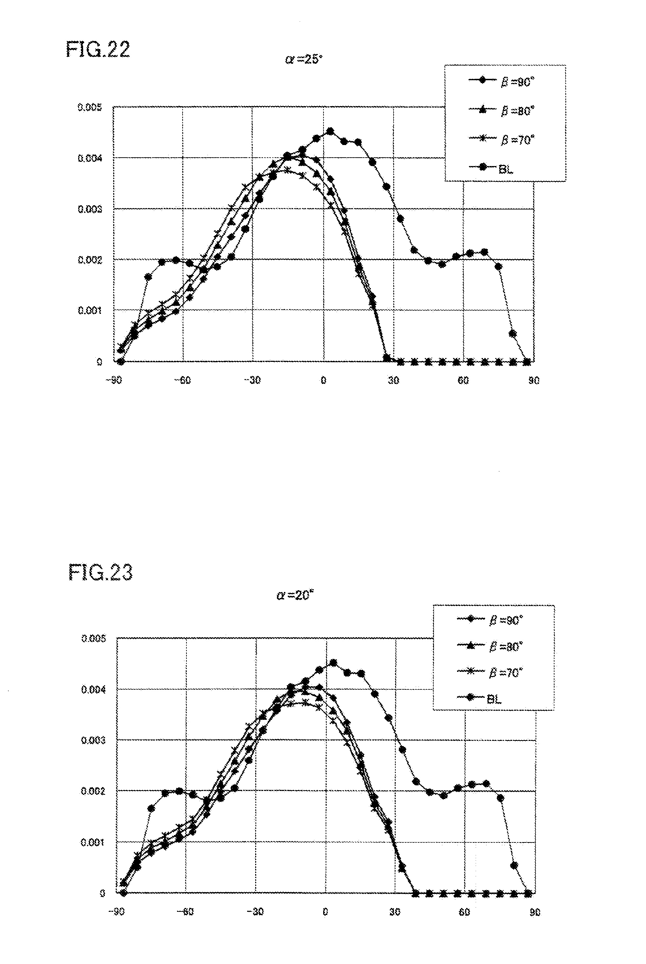

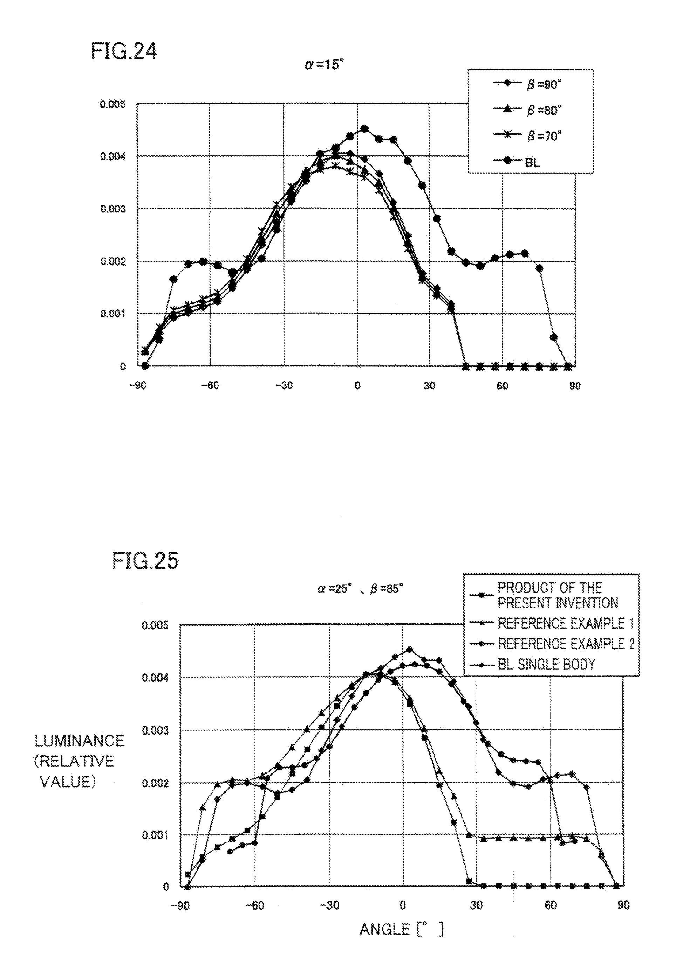

Figs. 21 to 24 illustrate the relationship between the viewing angle and the luminance when light distribution control panel 201 of the present invention is simulated, in which angle $\alpha$ formed by first light distribution control surface 213 and the base material surface and angle $\beta$ formed by second light distribution control surface 214 and the base material surface are changed, respectively. The figures illustrate the cases where angle $\alpha$ formed by first light distribution control surface 213 and the base material surface is set to 30°, 25°, 20°, and 15°, and angle $\beta$ formed by second light distribution control surface 214 and the base material surface is set to 70°, 75°, 80°, 85°, and 90°, respectively. In each figure, a line indicated by BL indicates the backlight light source. In addition, Fig. 25 illustrates, as a reference, comparison of the case where light distribution control sheet 210 of the present invention is used (a product of the present invention: $\alpha$=25°, $\beta$=85°) with the case where a light distribution control sheet that does not include light control member 215 is used (reference example 1: $\alpha$=25°, $\beta$=85°) and the case where a light distribution control sheet having equal angle $\alpha$ and angle $\beta$ is used (reference example 2: 160° prism). Assuming that light distribution control sheet 210 had a configuration shown in Fig. 18, the material had a refractive index of 1.53, base material 211 had a thickness of 200 $\mu$m, convex portion 212 had a width (pitch) of 100 $\mu$m, and second light distribution control surface 214 had a light transmittance of zero, simulation was performed with light shed from the convex portion 212 side.

According to this simulation, it is understood that in light distribution control sheet 210 of the present invention, the luminance becomes almost zero in the range of the emission angle of +25° or more without depending on angle $\alpha$ formed by first light distribution control surface 213 and the base material surface as well as angle $\beta$ formed by second light distribution control surface 214 and the base material surface.

For example, light distribution control panel 201 of the present invention is used in the display device for mounting on the mobile unit, for example, display device 10 of the car navigation system shown in Fig. 5, display device 10 such as a speed meter, and the like. As described above, light distribution control sheet 210 of the present invention allows the peak of the luminance distribution to shift from almost the front of light distribution control panel 201 to the necessary viewing angle side and allows the luminance on the unnecessary viewing angle side to approach almost zero. Accordingly, reflection on the windshield of an image displayed on display device 10 of the car navigation system and display device 10 that configures a display unit such as the speed meter and a so-called tachometer for displaying the rotation speed of an engine is prevented, which contributes to safe driving.

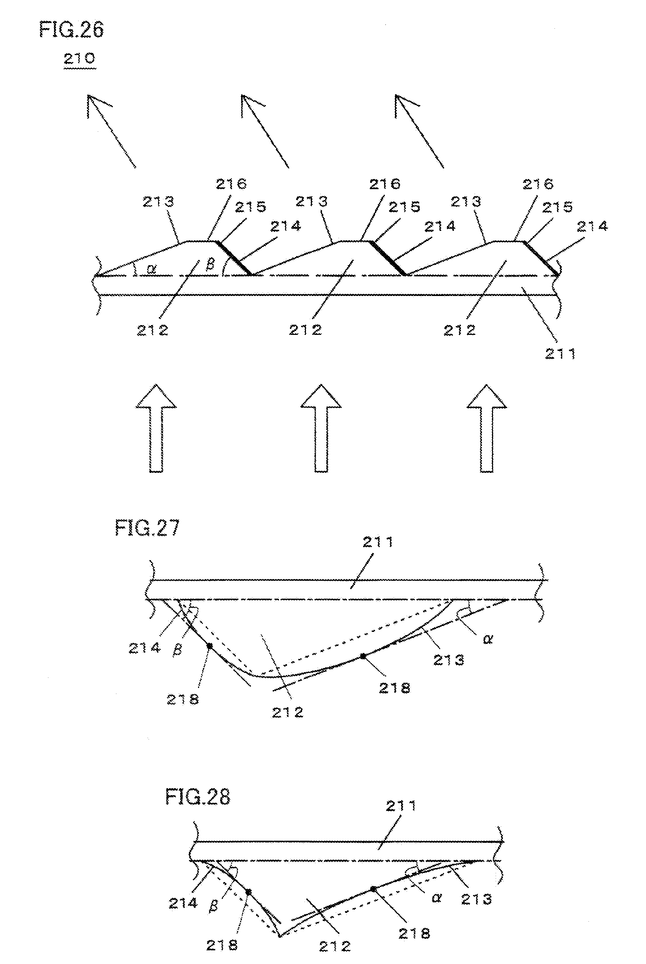

Although the case where convex portion 212 has a triangular end surface has been described in the above embodiment, convex portion 212 may be formed to have a substantially trapezoidal end surface in which convex portion 212 has a third light distribution control surface 216 on the light emission side as shown in Fig. 26, for example, if convex portion 212 has first light distribution control surface 213 that forms angle $\alpha$ with respect to base material 211 and second light distribution control surface 214 that forms angle $\beta$ with respect to base material 211. In this case as well, by forming light control member 215 on second light distribution control surface 214 that forms a large angle with respect to base material 211, the luminance in the unnecessary viewing angle can be suppressed to be almost zero. In addition, in this case, third light distribution control surface 216 is preferably directed to the light emission direction to prevent emission to the unnecessary viewing angle.

First light distribution control surface 213 and second light distribution control surface 214 are generally formed to have a planar shape as shown in Figs. 17 and 18. First light distribution control surface 213 and second light distribution control surface 214, however, need not necessarily to be formed to have a planar shape. For example, each of light distribution control surfaces 213 and 214 may be formed to be swollen convexly as shown in Fig. 27, or to be dented concavely as shown in Fig. 28. In addition, although not shown, any one of the light distribution control surfaces can be swollen and the other light distribution control surface can be dented. It is noted that angle $\alpha$ or $\beta$ formed with respect to base material 211 in these cases refers to an angle formed by the base material surface and a tangent line (tangent plane) in a center point 218 of each of first light distribution control surface 213 and second light distribution control surface 214 as shown in the figure.

Although light distribution control panel 201 as an image display panel including backlight 230 has been described in the above embodiment, a self-light-emitting image display panel (not shown) can also be used in the present invention. Unlike the display panel that displays an image on liquid crystal display panel 220 by using above backlight 230, the self-light-emitting image display panel does not require backlight 230 and allows display of an image by using, as a light source, an illuminant provided within the image display panel. Light distribution control sheet 210 of the present invention is also applicable to such a self-light-emitting image display panel, and is also applicable to both of an organic EL panel in which an organic material (organic Electroluminescence) is used as the illuminant and an inorganic EL panel in which an inorganic material (inorganic Electroluminescence) is used as the illuminant. Light distribution control sheet 210 is positioned on the image display surface side of the self-light-emitting image display panel. At this time, light distribution control sheet 210 can be positioned such that convex portion 212 faces the image display surface side or the light emission side. As described above, the image display panel is used in the present invention in a broad sense including various types of image display panels such as the liquid crystal panel in which the backlight light source is used, the self-light-emitting display panel including the organic EL panel and the inorganic EL panel. By combining the image display panel and the light distribution control sheet of the present invention, the light distribution characteristics can be further enhanced.

(Sixth Embodiment)

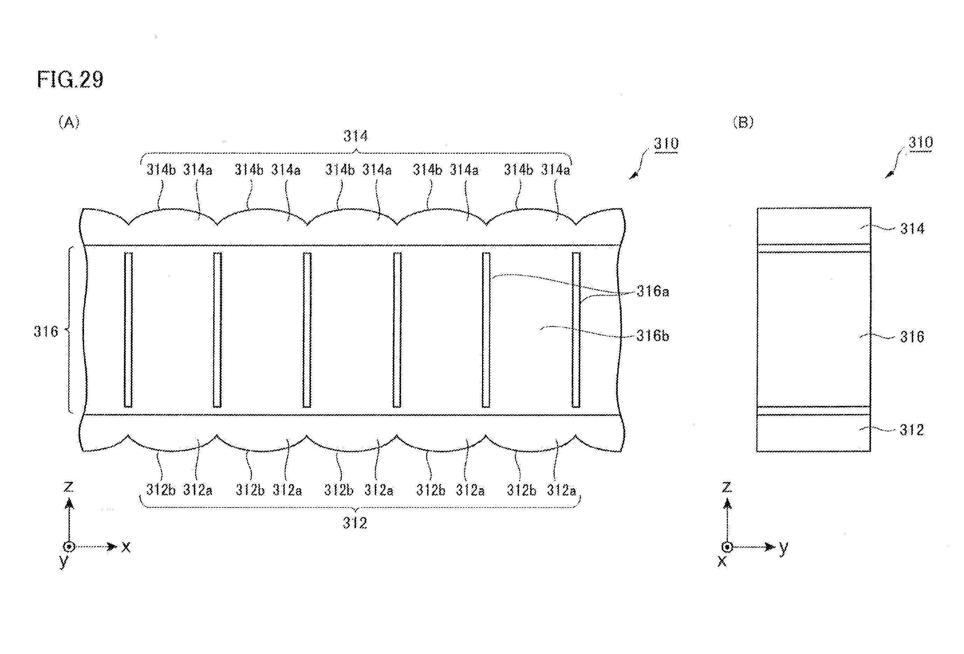

Fig. 29 schematically illustrates an optical component according to one embodiment. It is noted that a direction in which a plurality of first lens elements in a first lens array of the optical component are arranged will be referred to as an x direction hereinafter. In addition, a direction from the first lens array toward a second lens array will be referred to as a z direction, and a direction orthogonal to the x direction and the z direction will be referred to as a y direction. Fig. 29(A) illustrates the optical component as seen in the y direction, and Fig. 29(B) illustrates the optical component as seen in the x direction.

An optical component 310 shown in Fig. 29 includes a first lens array 312, a second lens array 314 and a light blocking portion array 316. First lens array 312 and second lens array 314 are, for example, cylindrical lens arrays, that is, so-called lenticular lenses. In optical component 310, light blocking portion array 316 is provided between first lens array 312 and second lens array 314.

First lens array 312 includes a plurality of first lens elements 312a. The plurality of first lens elements 312a are arranged in one direction, that is, in the x direction. First lens elements 312a each includes a convex incidence surface 312b. In other words, first lens element 312a has a convex surface on the opposite side of a boundary between light blocking portion array 316 and this first lens element 312a. In the present embodiment, each of first lens elements 312a is a cylindrical lens.

Second lens array 314 includes a plurality of second lens elements 314a. The plurality of second lens elements 314a are also arranged in one direction. In the present embodiment, the plurality of second lens elements 314a are also arranged in the x direction. In other words, second lens elements 314a are arranged in the same direction as the direction in which the plurality of first lens elements 312a are arranged. Second lens elements 314a each includes a convex emission surface 314b. In other words, second lens element 314a has a convex surface on the opposite side of a boundary between light blocking portion array 316 and this second lens element 314a. In the present embodiment, each of second lens elements 314a is also the cylindrical lens.

Light blocking portion array 316 has a plurality of light blocking portions 316a. In the present embodiment, the plurality of light blocking portions 316a each has a plate-like shape. The plurality of light blocking portions 316a are arranged in one direction with spacings therebetween. In the present embodiment, the plurality of light blocking portions 316a are arranged in the same direction as the direction in which the plurality of first lens elements 312a are arranged. In addition, the plurality of light blocking portions 316a extend along a surface that intersects the direction in which the plurality of light blocking portions 316a are arranged. In light blocking portion array 316 of the present embodiment, a member, for example a resin, transparent to incident light is filled with a space 316b between adjacent light blocking portions 316a.

In the present embodiment, the cycle of the plurality of first lens elements 312a, the cycle of the plurality of second lens elements 314a, and the cycle of the plurality of light blocking portions 316a are all the same. In addition, light blocking portion 316a is provided between a boundary between adjacent lens elements 312a and a boundary between adjacent second lens elements 314a. Furthermore, a position of the boundary between adjacent first lens elements 312a in the direction in which these first lens elements 312a are arranged matches a position of the boundary between adjacent second lens elements 314a in the direction in which these second lens elements 314a are arranged. In other words, an optical axis of first lens element 312a matches an optical axis of second lens element 314a.

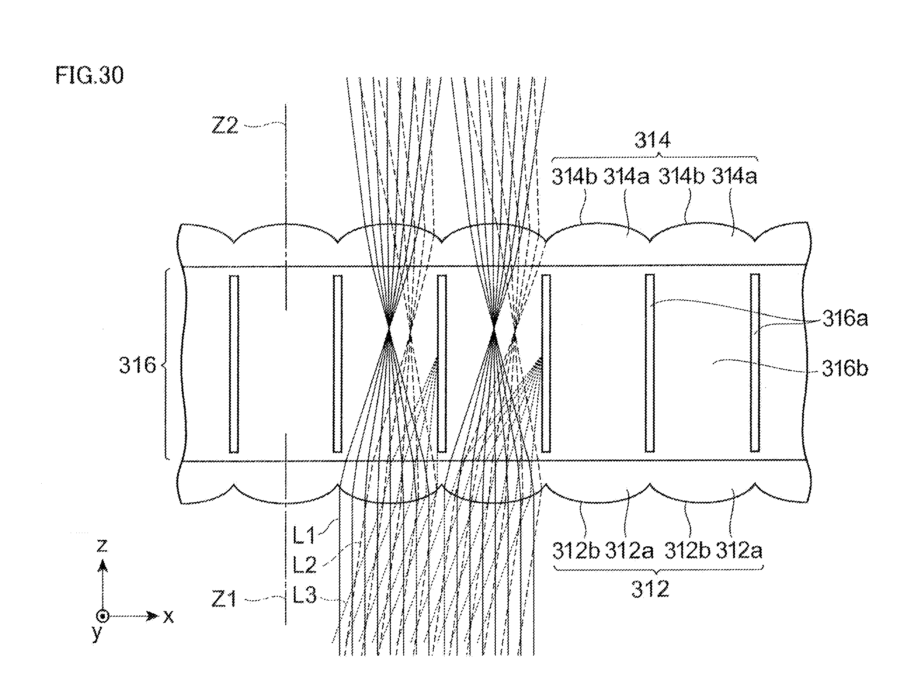

A path of light incident to the present optical component will be described in detail hereinafter. In Fig. 30, the solid line indicates a path of light L1 (light in an incident direction of 0°) incident in parallel to an optical axis Z1 of first lens element 312a, of the light incident to optical component 310. In addition, the broken line indicates a path of light L2 incident at a small angle with respect to optical axis Z1, of the light incident to optical component 310. Furthermore, the dotted line indicates a path of light L3 incident at a large angle with respect to the optical axis of first lens element 312a, of the light incident to optical component 310.

As shown in Fig. 30, light L1 and L2 incident at a small angle with respect to optical axis Z1, of the light incident to optical component 310, are collected at space 316b by first lens element 312a and coupled to second lens element 314a. The light reaching second lens element 314a is emitted to form a small angle with respect to an optical axis Z2 of second lens element 314a.

On the other hand, light L3 that forms a larger angle with respect to optical axis Z1 than light L1 and light L2, of the light incident to optical component 310, is coupled to light blocking portion 316a. Accordingly, light L3 is blocked by light blocking portion 316a and is not coupled to second lens element 314a.

In such a manner, in optical component 310, the incident light incident at a small angle with respect to optical axis Z1 of first lens element 312a can be coupled to second lens array 314, without blocked by light blocking portion 316a. In addition, the light incident to second lens array 314 is emitted such that the emission direction forms a small angle with respect to optical axis Z2. Accordingly, optical component 310 can narrow the viewing angle, and the loss of unnecessary light due to light blocking portion 316a can be reduced, which can enhance the efficiency of use of light.

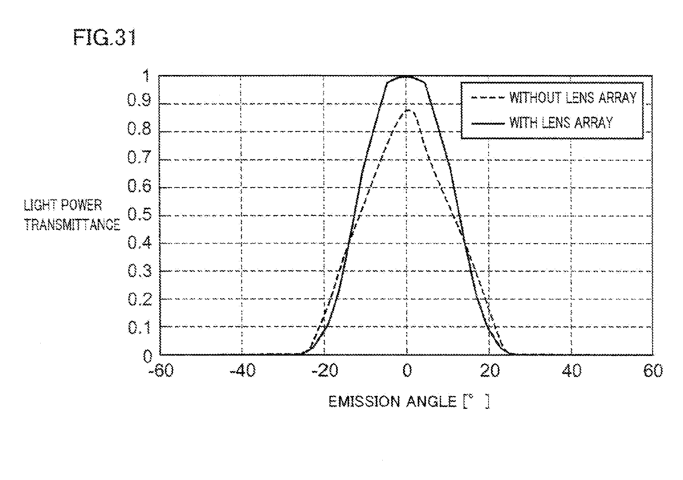

In Fig. 31, the horizontal axis indicates the emission angle of light, and the vertical axis indicates the ratio between the power of light emitted at a certain emission angle and the power of the light incident to the optical component. The characteristics indicated by the solid line in Fig. 31 are for an optical component with a lens array, that is, the optical component of the present embodiment, and the characteristics indicated by the dotted line are for a conventional optical component without a lens array.

The characteristics for the optical component of the present embodiment shown in Fig. 31 are obtained for an optical component having the following parameters:

thickness of the first lens element on the optical axis: 0.3 mm;
the first lens element and the second lens element: cylindrical lens;
curvatures of the incidence surface of the first lens element and the emission surface of the second lens element: 0.5 mm;
shapes of the emission surface of the first lens element and the incidence surface of the second lens element: planar;
cycles of the first lens element and the second lens element: 0.6 mm;
distance between the first lens element and the second lens element: 1.2 mm;
material of the first lens element: polycarbonate (refractive index: 1.59);
material of the second lens element: polycarbonate (refractive index: 1.59);
thickness of the light blocking portion: 50 $\mu$m;
length of the light blocking portion: 1 mm;
cycle of the light blocking portion: 0.6 mm;
material of the light blocking portion: black-colored silicone rubber; and
material of the space between the light blocking portions: silicone rubber (refractive index: 1.43).

As is clear from Fig. 31, in the optical component of the present embodiment, light emitted at a large angle with respect to the optical axis of the second lens element has a small transmittance, and light emitted at a small angle with respect to the optical axis of the second lens element has a large transmittance. Accordingly, in the present optical component, the efficiency of use of light having a small emission angle can be enhanced, as compared with the conventional optical component.

The suitable embodiments of the present invention have been described above. In the optical component of the present invention, a spacing between adjacent light blocking portions, a spacing between adjacent first lens elements, and a spacing between adjacent second lens elements are preferably equal. In addition, the first lens element and the second lens element preferably have the positive power in the z-x plane.

Furthermore, the boundary position in the direction in which adjacent first lens elements are arranged preferably matches the position of the light blocking portion in the direction in which adjacent first lens elements are arranged. It is noted that a manner in which the light blocking portion is located on the optical axis of the first lens element is not preferable because light incident at a small angle with respect to the optical axis of the first lens element is blocked. The boundary position in the direction in which adjacent first lens elements are arranged may be slightly shifted from the position of the light blocking portion in the direction in which adjacent first lens elements are arranged.

Moreover, the shape of the first lens element and the shape of the second lens element may be the same or different from each other. The length of the light blocking portion in the z direction may be equal to the distance from the first lens array to the second lens array, or may be shorter than this distance. In order to efficiently block light incident at a large angle with respect to the optical axis of the first lens element, the length of the light blocking portion in the z direction needs to be at least about a half of the distance from the first lens array to the second lens array.

The light blocking portion preferably has a transmittance of 0% in a wavelength (e.g., 400 to 700 nm) of incident light. Even if the light blocking portion has a transmittance of about 10%, the desired effect of the present optical component is obtained.

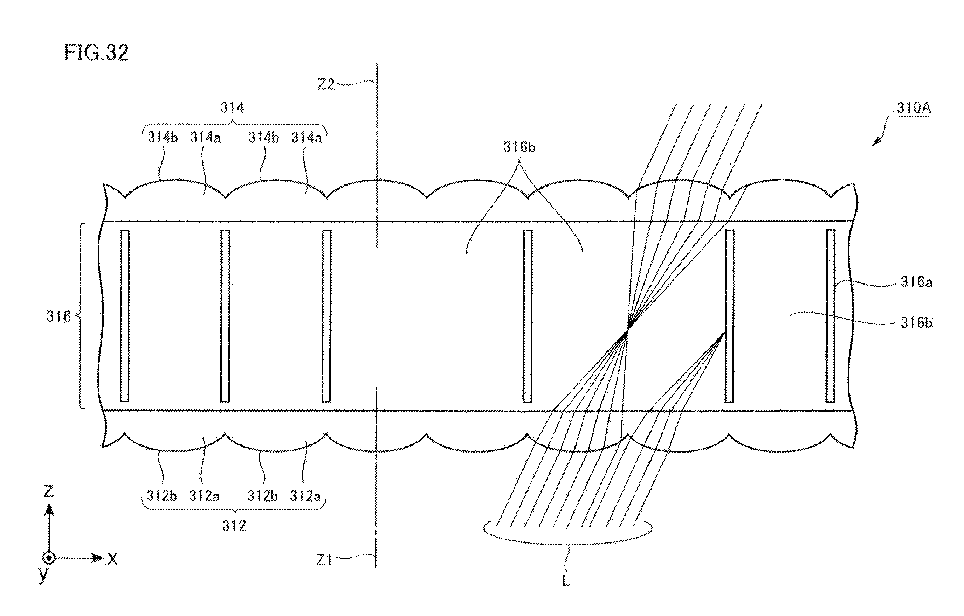

In addition, the cycle of the plurality of light blocking portions may be N times (N is an integer of 1 or more) of the cycle of the plurality of first lens elements and the cycle of the plurality of second lens elements. In an optical component 310A shown in Fig. 32, in a part of light blocking portion array 316, the cycle (spacing) of adjacent two light blocking portions 316a is twice as the cycle of the plurality of first lens elements 312a and the cycle of the plurality of second lens elements 314a. In this optical component 310A, light L incident at a large angle with respect to optical axis Z1 of first lens element 312a passes through space 316b having a double cycle and is emitted at a large angle with respect to optical axis Z2 of the second lens element.

The amount of the light, however, is negligible.

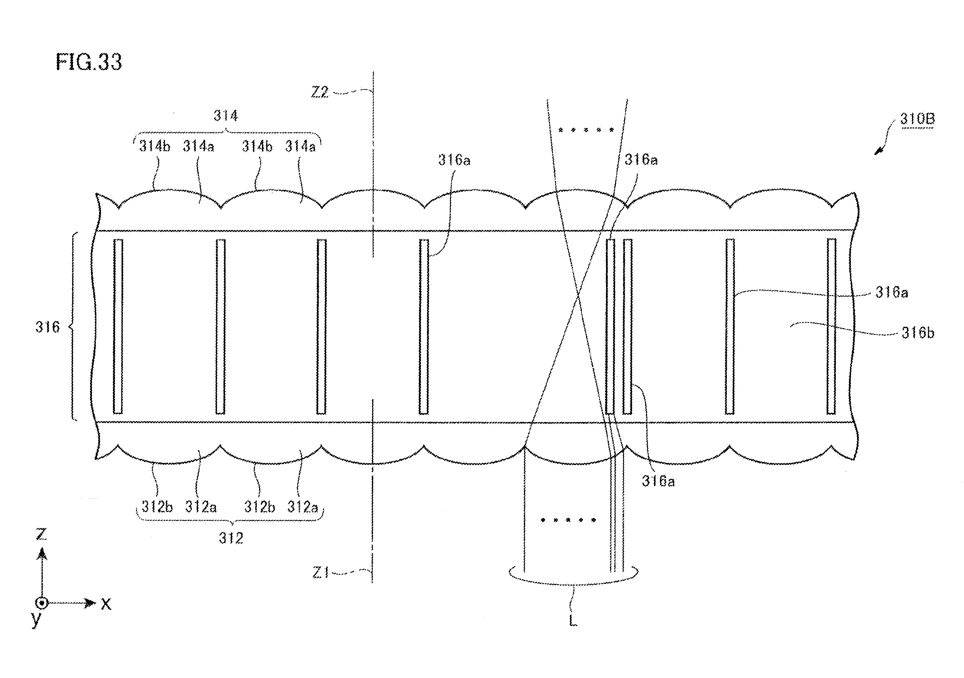

Furthermore, the cycle of the plurality of light blocking portions may be partially different from the cycle of the plurality of first lens elements and the cycle of the plurality of second lens elements. In an optical component 310B shown in Fig. 33, one light blocking portion 316a deviates to the one light blocking portion side of another two light blocking portions 316a adjacent to that light blocking portion 316a. In this optical component 310B, a part of light L incident at a small angle with respect to optical axis Z1 of first lens element 312a is blocked by light blocking portion 316a. The amount of the light, however, is negligible.

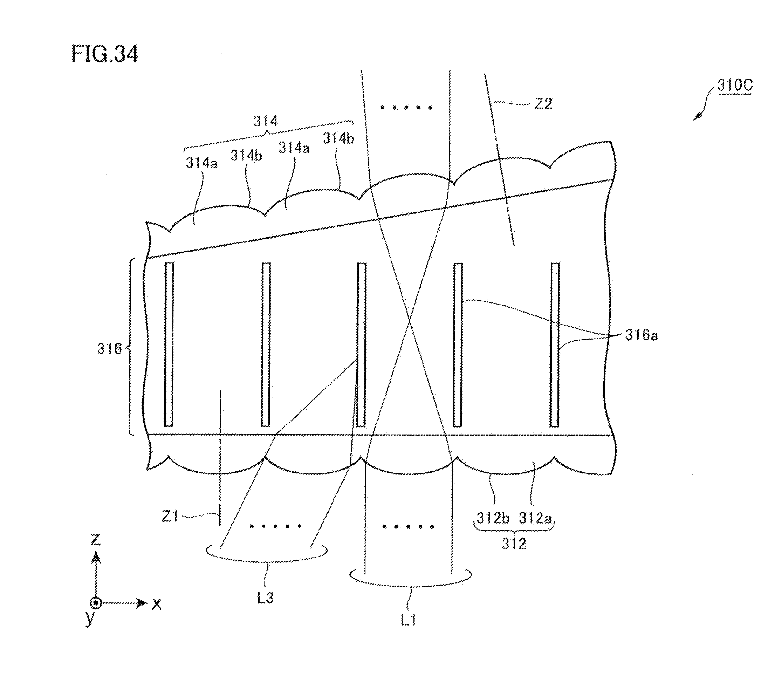

Moreover, the direction in which the plurality of second lens elements are arranged may be different from the direction in which the plurality of first lens elements are arranged and the direction in which the plurality of light blocking portions are arranged. In an optical component 310C shown in Fig. 34, the direction in which the plurality of second lens elements 314a are arranged is inclined with respect to the direction in which the plurality of first lens elements 312a are arranged and the direction in which the plurality of light blocking portions 316a are arranged. Even in this optical component 310C, light L1 incident at a small angle with respect to the optical axis of first lens element 312a can be coupled to the second lens array. On the other hand, light L3 incident at a large angle with respect to the optical axis of first lens element 312a can be blocked by light blocking portion 316a.

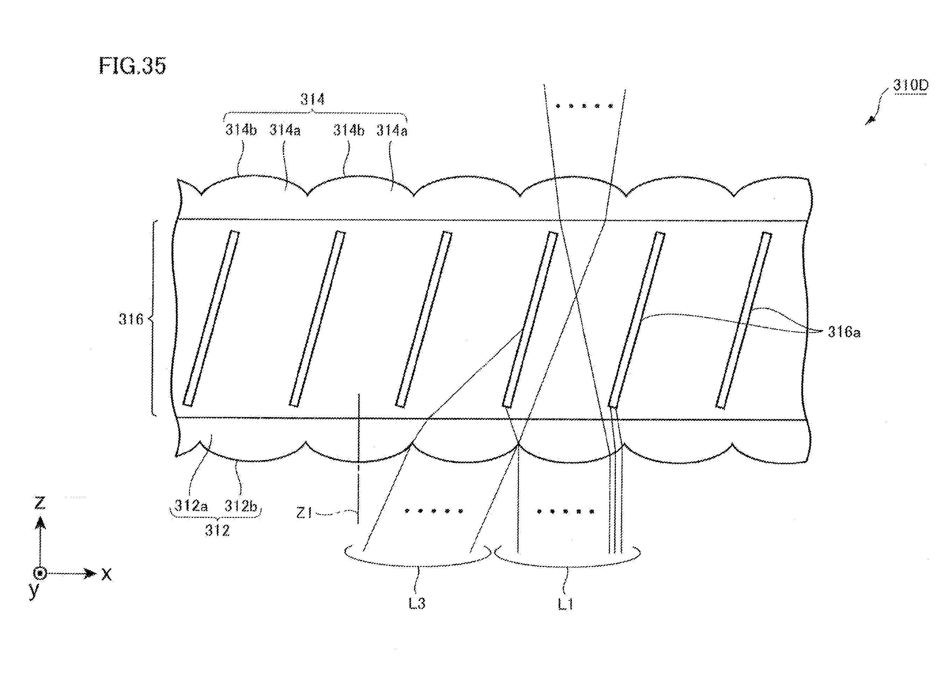

Additionally, the light blocking portion may be inclined with respect to the optical axis of the first lens element. In an optical component 310D shown in Fig. 35, light blocking portion 316a is inclined with respect to optical axis Z1 of first lens element 312a. The inclination angle up to approximately 2° is acceptable. In this optical component 310D as well, a large part of light L1 incident at a small angle with respect to optical axis Z1 can be coupled to second lens array 314. On the other hand, a large part of light L3 incident at a large angle with respect to optical axis Z1 can be blocked by light blocking portion 316a.

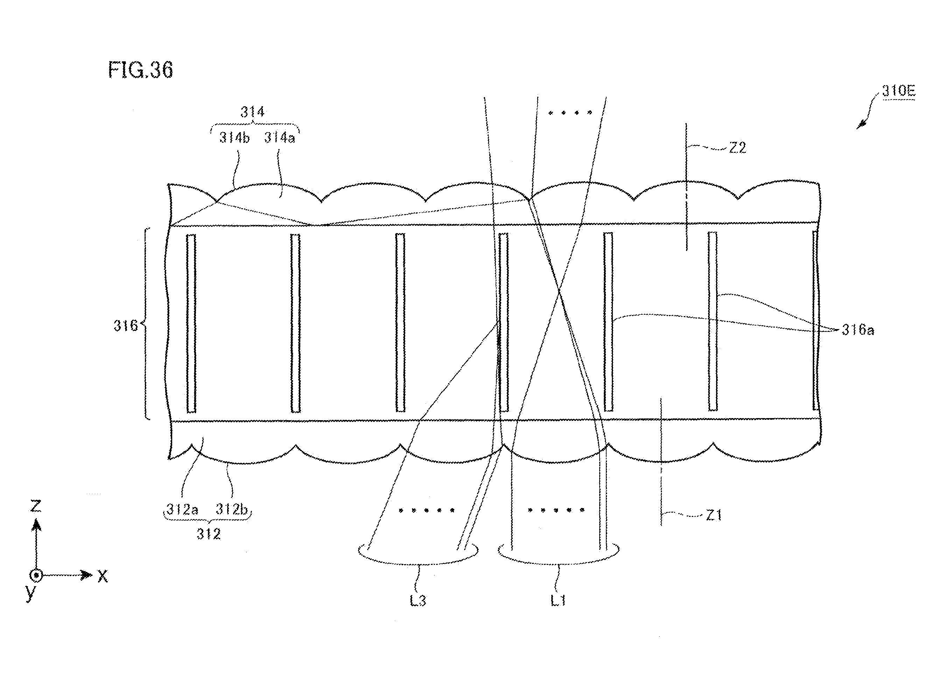

Besides, the boundary position between adjacent second lens elements may not match the boundary position between adjacent first lens elements, in the arrangement direction. In an optical component 310E shown in Fig. 36, the boundary position between adjacent first lens elements 312a in the arrangement direction x matches the position of light blocking portion 316a in the x direction. On the other hand, the boundary position between adjacent first lens elements 312a in the arrangement direction x does not match the boundary position between adjacent second lens elements 314a in the arrangement direction x. Even in this optical component 310E, if a shift between both boundary positions is slight, a large part of light L1 incident at a small angle with respect to optical axis Z1 of first lens element 312a can be emitted from second lens array 314, while a large part of light L3 incident at a large angle with respect to optical axis Z1 of first lens element 312a can be blocked by light blocking portion 316a. On the other hand, when the boundary position between adjacent second lens elements 314a is located on the optical axis of first lens element 312a, the emission angle of light emitted from the second lens array becomes large. Therefore, such a manner is not preferable.

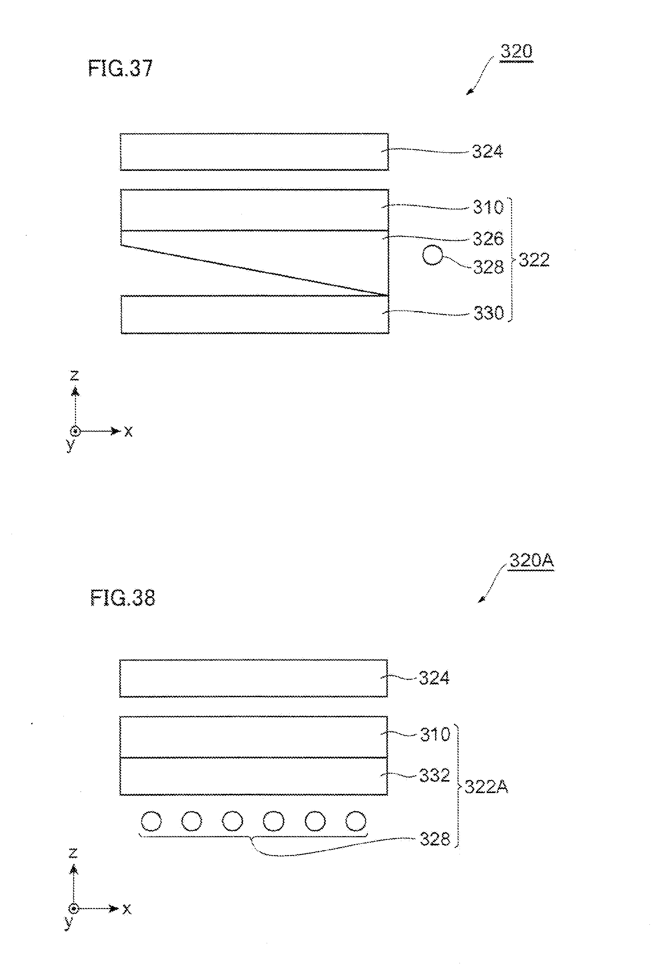

A display device in which the above optical component is used will be described hereinafter. A display device 320 shown in Fig. 37 includes a lighting device 322 and a liquid crystal panel 324. Lighting device 322 has an optical component 310, a light guiding plate 326, a light source 328, and a reflector 330. It is noted that lighting device 322 may not have reflector 330. In this display device 320, light incident to an end surface of light guiding plate 326 enters optical component 310. A part of the light incident to optical component 310 enters the back surface of liquid crystal panel 324, and is emitted from the surface of this liquid crystal panel 324. Since this display device 320 includes optical component 310, the viewing angle thereof is small. In addition, since display device 320 includes optical component 310, display device 320 has high efficiency of use of light.

A display device 320A shown in Fig. 38 includes a lighting device 322A and liquid crystal panel 324. Lighting device 322A has optical component 310, light source 328 and a diffusing plate 332. In display device 320A, light from the light source is diffused by diffusing plate 332 and enters optical component 310. A part of the light incident to optical component 310 enters the back surface of liquid crystal panel 324, and is emitted from the surface of this liquid crystal panel 324. Since display device 320A also includes optical component 310 similarly to display device 320, the viewing angle thereof is small. In addition, display device 320A also has high efficiency of use of light. It is noted that in display devices 320 and 320A, any one of optical components 310A to 310E may be used instead of optical component 310.

(Seventh Embodiment)

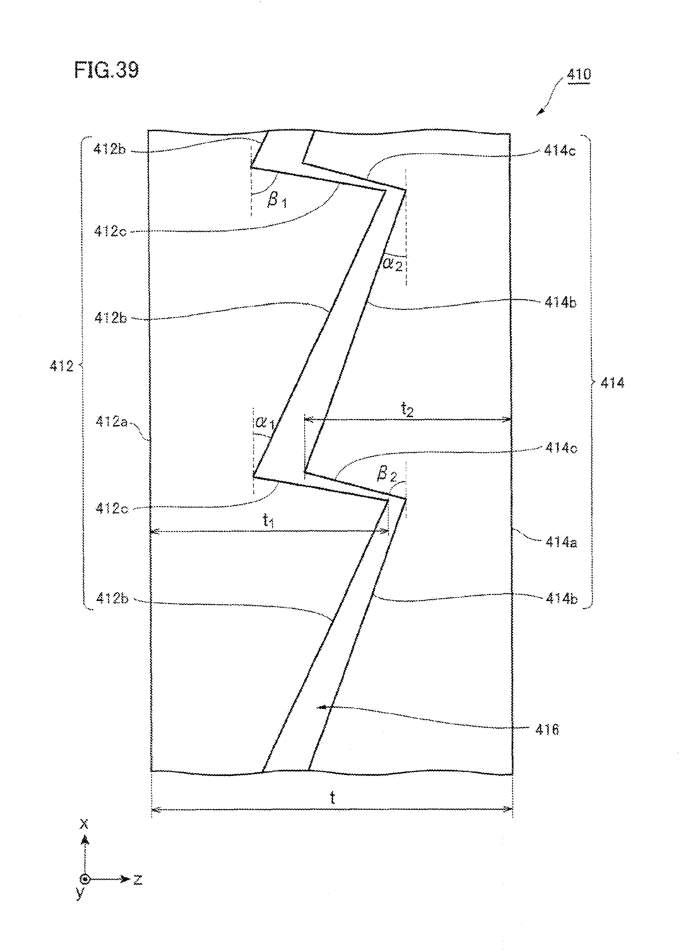

Fig. 39 schematically illustrates an optical component 410 as seen in a direction (y direction) that intersects a direction (x direction) in which a prism element is arranged in optical component 410 and a direction (z direction) from the incidence plane toward the emission plane.

Optical component 410 shown in Fig. 39 includes a first prism array 412 and a second prism array 414. First prism array 412 is a component positioned on the light source side with respect to second prism array 414. In this optical component 410, light incident to first prism array 412 is emitted from second prism array 414.

First prism array 412 has an incidence plane 412a, a plurality of first surfaces 412b and a plurality of second surfaces 412c. Incidence plane 412a is a surface which light from the light source enters, and substantially forms a plane.

First surface 412b and second surface 412c are alternately provided. Adjacent first surface 412b and second surface 412c extend along two surfaces that intersect incidence plane 412a and intersect each other, respectively. An angle α1 formed by first surface 412b with respect to incidence plane 412a is smaller than an angle β1 formed by second surface 412c with respect to incidence plane 412a. In first prism array 412 having such a surface configuration, incidence plane 412a and adjacent first surface 412b and second surface 412c configure the prism element. In first prism array 412, the prism elements configured in such a manner are arranged in one direction (x direction). In such a manner, first prism array 412 has a plurality of prism elements, and the cycle in the direction in which the prism elements are arranged can be set to approximately several hundred micrometers.

Second prism array 414 has an emission plane 414a, a plurality of third surfaces 414b and a plurality of fourth surfaces 414c. Emission plane 414a is a surface from which the light incident to this optical component 410 is emitted outside, and substantially forms a plane.

Third surface 414b and fourth surface 414c are also alternately provided. Adjacent third surface 414b and fourth surface 414c extend along two surfaces that intersect emission plane 414a and intersect each other, respectively. An angle α2 formed by third surface 414b with respect to emission plane 414a is smaller than an angle β2 formed by fourth surface 414c with respect to emission plane 414a. In second prism array 414 having such a surface configuration, emission plane 414a and adjacent third surface 414b and fourth surface 414c configure the prism element. In second prism array 414, the prism elements configured in such a manner are arranged in one direction (x direction). In such a manner, second prism array 414 has a plurality of prism elements, and the cycle in the direction in which the prism elements are arranged can be set to approximately several hundred micrometers.

First prism array 412 and second prism array 414 are spaced such that first surface 412b faces third surface 414b and second surface 412c faces fourth surface 414c. In the present embodiment, first prism array 412 and second prism array 414 are provided such that the sum of a distance t1 from incidence plane 412a of first prism array 412 to a side where first surface 412b intersects second surface 412c and a distance t2 from emission plane 414a of second prism array 414 to a side where third surface 414b intersects fourth surface 414c becomes smaller than a distance t between incidence plane 412a and emission plane 414a.

A medium 416 is provided between first prism array 412 and second prism array 414 provided in such a manner. An air layer or an adhesive layer can be used as medium 416. A refractive index n1 of first prism array 412 and a refractive index n2 of second prism array 414 are larger than a refractive index no of this medium 416.

In optical component 410, if first prism array 412 is the same as second prism array 414, most of incident light beam is emitted at an angle equal to the incidence angle. Accordingly, any one of α1≠α2, β1≠β2, and $n_1 \neq n_2$ needs to be satisfied.

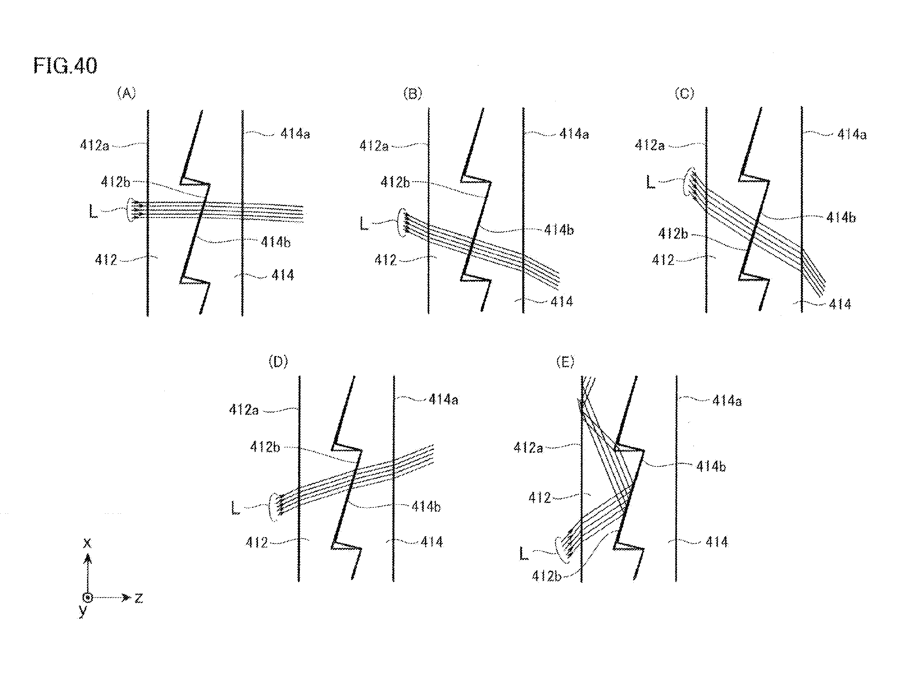

A path of light incident to such optical component 410 will be described hereinafter. Fig. 40 illustrates a path of light entering incidence plane 412a and reaching first surface 412b. Fig. 40(A) illustrates a path of light L incident to incidence plane 412a at an incidence angle of 0°. Fig. 40(B) illustrates a path of light L incident to incidence plane 412a at a small incidence angle (at a shallow angle from the upper side in the figure) with inclination from one side to the other side of the direction (x direction) in which the prism elements are arranged. Fig. 40(C) illustrates a path of light L incident to incidence plane 412a at a large incidence angle (at a deep angle from the upper side in the figure) with inclination from one side to the other side of the direction in which the prism elements are arranged. Fig. 40(D) illustrates a path of light L incident to incidence plane 412a at a small incidence angle (at a shallow angle from the lower side in the figure) with inclination from the other side to one side of the direction in which the prism elements are arranged. Fig. 40(E) illustrates a path of light L incident to incidence plane 412a at a large incidence angle (at a deep angle from the lower side in the figure) with inclination from the other side to one side of the direction in which the prism elements are arranged. One side of the direction in which the prism elements are arranged herein refers to a side where second surface 412c is located with respect to first surface 412b in one prism element of first prism array 412. In addition, the other side of the direction in which the prism elements are arranged refers to a side where first surface 412b is located with respect to second surface 412c in one prism element of first prism array 412.

As shown in Figs. 40(A), (B) and (C), light L incident to incidence plane 412a at an incidence angle of 0° as well as light L incident to incidence plane 412a with inclination from one side to the other side of the direction (x direction) in which the prism elements are arranged are emitted from emission plane 414a with inclination from one side to the other side of the direction in which the prism elements are arranged.

In addition, as shown in Fig. 40(D), light L incident to incidence plane 412a at a small incidence angle with inclination from the other side to one side of the direction in which the prism elements are arranged is emitted from emission plane 414a at a small emission angle with inclination from the other side to one side of the direction in which the prism elements are arranged.

On the other hand, as shown in Fig. 40(E), light L incident to incidence plane 412a at a large angle with inclination from the other side to one side of the direction in which the prism elements are arranged does not reach second prism array 414 due to total reflection. Most of light L repeats total reflection in first prism array 412 and escapes from incidence plane 412a. Accordingly, this optical component 410 allows control over the emission direction of light incident from the light source.

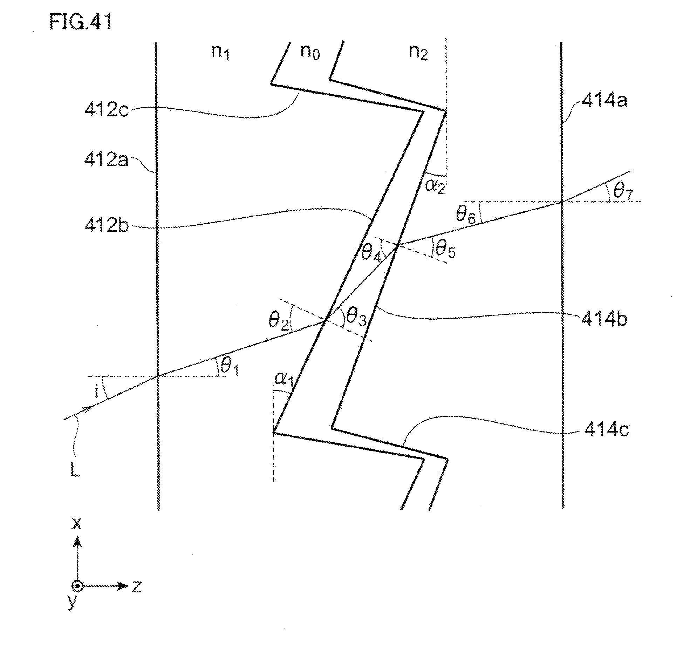

Fig. 41 illustrates angles formed by light beam L shown in Fig. 40(D) with respect to lines normal to respective surfaces of optical component 410. Fig. 41 illustrates an incidence angle i of light beam L to incidence plane 412a, an emission angle θ1 of light beam L from incidence plane 412a, an incidence angle θ2 of light beam L to first surface 412b, an emission angle θ3 of light beam L from first surface 412b, an incidence angle θ4 of light beam L to third surface 414b, an emission angle θ5 of light beam L from third surface 414b, an incidence angle θ6 of light beam L to emission plane 414a, and an emission angle θ7 of light beam L from emission plane 414a.

According to the Snell's law, the relationship between incidence angle i and emission angle θ7 is as described in the following expressions:

$$\sin(i) = n1 \times \sin\theta1 \qquad (1)$$

$$\theta2 = \theta1 + \alpha1$$

$$n1 \times \sin(\theta2) = n0 \times \sin(\theta3)$$

$$\theta4 = \theta3 - \alpha1 + \alpha2$$

$$n0 \times \sin(\theta4) = n2 \times \sin(\theta5)$$

$$\theta6 = \theta5 - \alpha2$$

$$n2 \times \sin(\theta6) = \sin(\theta7).$$

As incidence angle i is increased until θ2 reaches a critical angle, emission angle θ7 is also increased. Therefore, emission angle θ7 of light beam L having the path as shown in Fig. 40(D) is increased when incidence angle i to incidence plane 412a is slightly smaller than an incidence angle iR at which incidence angle θ2 of the light beam to first surface 412b reaches the critical angle. Here, for incidence angle $i_R$, the following relational expression is satisfied.

$$\sin(i_R) = n1 \times \sin(\sin^{-1}(n0/n1) - \alpha1)$$

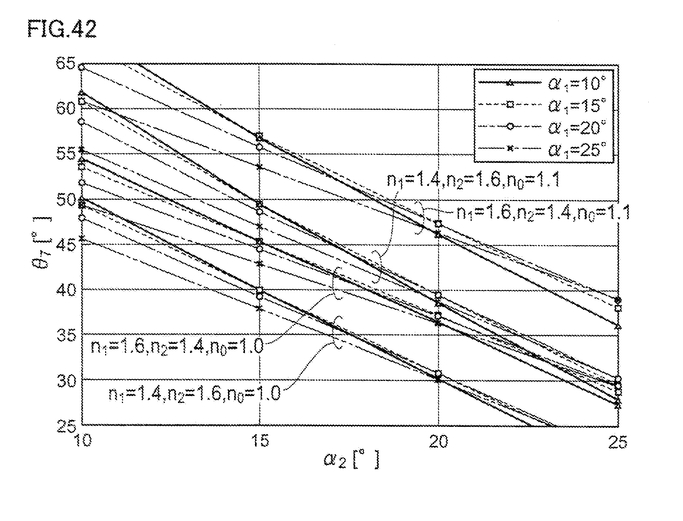

Fig. 42 illustrates the relationship between α2 and θ7 when $i = i_R - 0.1°$, by using α1, n1, n2 and $n_0$ as parameters. As is clear from Fig. 42, by appropriately selecting the parameters, emission angle θ7 can be decreased. In addition, as is clear from Fig. 42, when the relationship of $n_1 < n_2$ is satisfied, emission angle θ7 can be decreased. Furthermore, as is clear from Fig. 42, when no is decreased, emission angle θ7 can be decreased. Accordingly, the air layer is preferably used as medium 416.

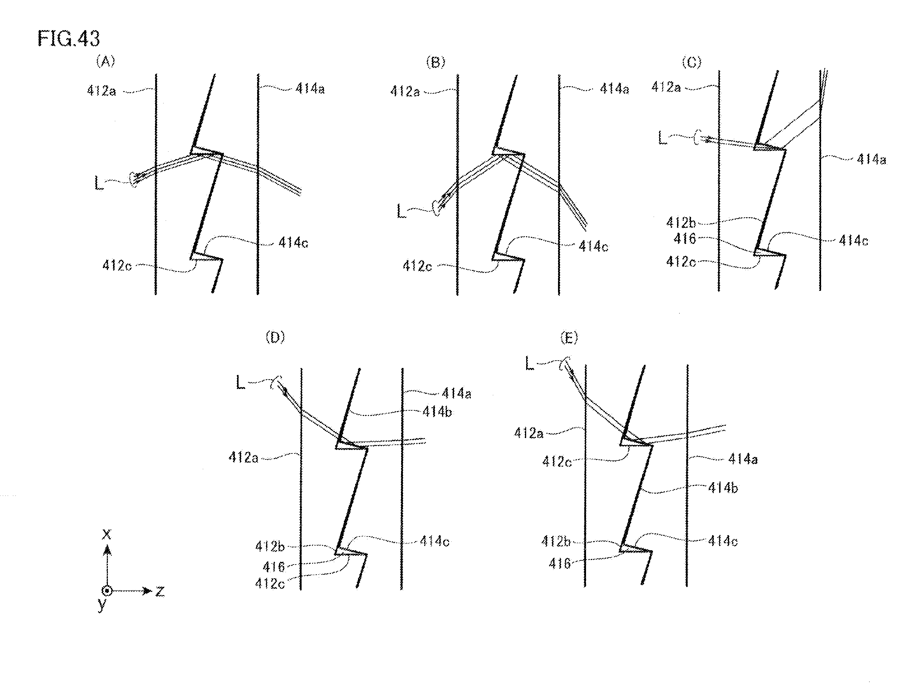

Next, a path of light entering incidence plane 412a and reaching second surface 412c or fourth surface 414c will be described. Fig. 43 illustrates a path of light incident to the optical component according to one embodiment, and illustrates the path of light entering incidence plane 412a and reaching second surface 412c or fourth surface 414c. Fig. 43(A) illustrates a path of light L incident to incidence plane 412a at a small incidence angle (at a shallow angle from the lower side in the figure) with inclination from the other side to one side of the direction (x direction) in which the prism elements are arranged. Fig. 43(B) illustrates a path of light L incident to incidence plane 412a at a large incidence angle (at a deep angle from the lower side in the figure) with inclination from the other side to one side of the direction in which the prism elements are arranged. Fig. 43(C) illustrates a path of light L incident to incidence plane 412a at a small incidence angle (at a shallow angle from the upper side in the figure) with inclination from one side to the other side of the direction in which the prism elements are arranged. Figs. 43(D) and (E) illustrate a path of light L incident to incidence plane 412a at a large incidence angle (at a deep angle from the upper side in the figure) with inclination from one side to the other side of the direction in which the prism elements are arranged.

As shown in Figs. 43(A) and (B), light L incident to incidence plane 412a with inclination from the other side to one side of the direction in which the prism elements are arranged is totally reflected by second surface 412c regardless of the incidence angle, and is emitted from emission plane 414a in the direction of inclination from one side to the other side of the direction in which the prism elements are arranged.

On the other hand, as shown in Fig. 43(C), light L incident to incidence plane 412a at a small incidence angle with inclination from one side to the other side of the direction in which the prism elements are arranged passes through first surface 412b and medium 416, and reaches fourth surface 414c. Light L is emitted at a large emission angle with inclination from the other side to one side of the direction in which the prism elements are arranged. The amount of such emitted light is, however, small because a little light follows such a path.

In addition, as shown in Figs. 43(D) and (E), light L incident to incidence plane 412a at a large incidence angle with inclination from one side to the other side of the direction in which the prism elements are arranged passes through first surface 412b, medium 416 and third surface 414b, and reaches fourth surface 414c. Light L is emitted from emission plane 414a at a small emission angle with inclination from the other side to one side of the direction in which the prism elements are arranged. It is noted that the emission angle of such light is small as is clear from comparison with the light emitted through surface B in Fig. 51(E). This is because the angle of the incident light beam is changed by first prism array 412 and the light beam is incident to fourth surface 414c of second prism array 414 at a shallow angle, and thus, the emission angle of the emitted light is decreased.

The path of light in optical component 410 has been described above with reference to Figs. 40 and 43. As is clear from comparison between Figs. 40 and 43 and Fig. 51, the amount of light that leads to a loss is small in optical component 410. In other words, optical component 410 has high efficiency of use of light. In addition, second surface 412c and fourth surface 414c need not to be roughened, and thus, optical component 410 can be readily processed.

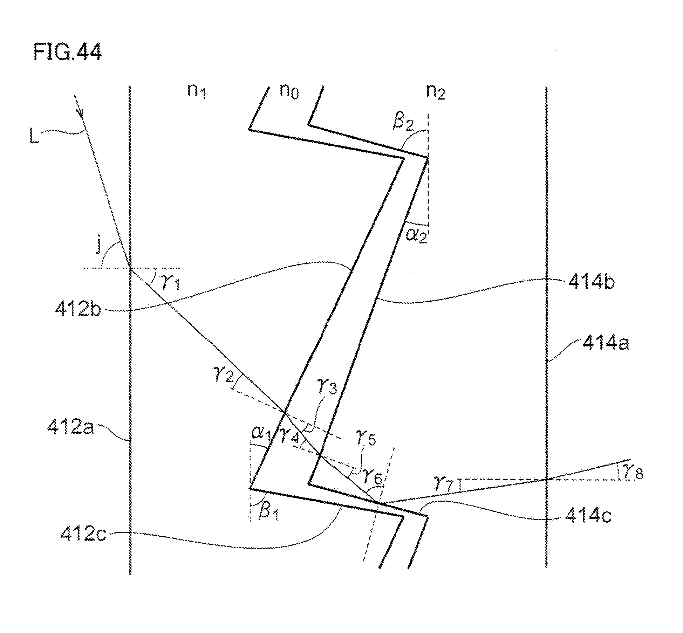

Fig. 44 illustrates angles formed by light L shown in Figs. 43(D) and (E) with respect to lines normal to respective surfaces of optical component 410. Fig. 44 illustrates an incidence angle j of light beam L to incidence plane 412a, an emission angle $\gamma 1$ of light beam L from incidence plane 412a, an incidence angle $\gamma 2$ of light beam L to first surface 412b, an emission angle $\gamma 3$ of light beam L from first surface 412b, an incidence angle $\gamma 4$ of light beam L to third surface 414b, an emission angle $\gamma 5$ of light beam L from third surface 414b, an incidence angle $\gamma 6$ of light beam L to fourth surface 414c, an incidence angle $\gamma 7$ of light beam L to emission plane 414a, and an emission angle $\gamma 8$ of light beam L from emission plane 414a.

According to the Snell's law, the relationship between incidence angle j of light beam L shown in Fig. 44 to incidence plane 412a and emission angle $\gamma 8$ of this light beam L from emission plane 414a is as described in the following expressions:

$$\sin(j)=n1\times\sin(\gamma 1)$$

$$\gamma 2=\gamma 1-\alpha 1$$

$$n_1\times\sin(\gamma 2)=n_0\times\sin(\gamma 3)$$

$$\gamma 4=\gamma 3+\alpha 1-\alpha 2$$

$$n_0\times\sin(\gamma 4)=n_2\times\sin(\gamma 5)$$

$$\gamma 6=180°-\gamma 5-\alpha 2-\beta 2$$

$$\gamma 7=\beta 2-\gamma 6$$

$$n_2\times\sin(\gamma 7)=\sin(\gamma 8).$$

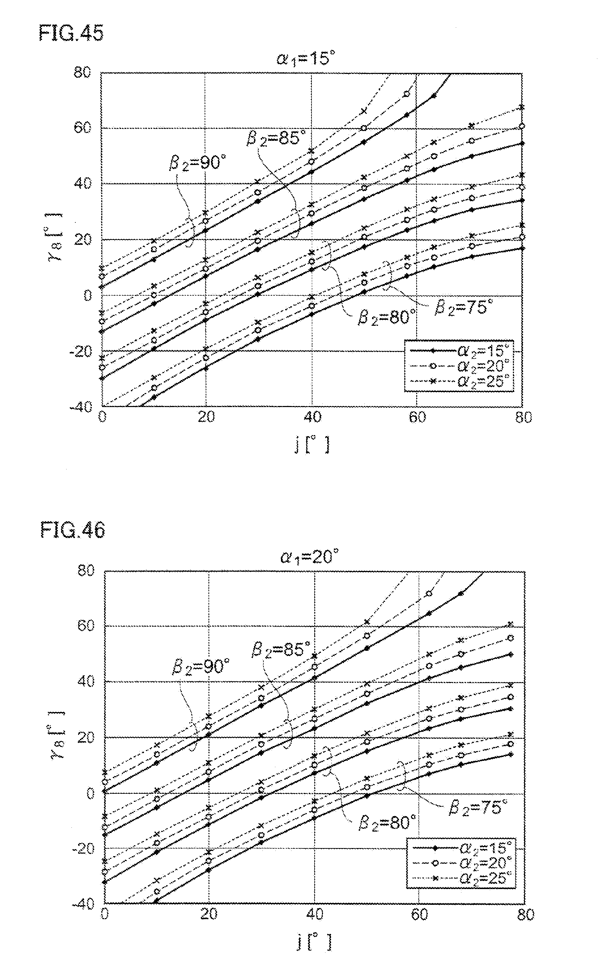

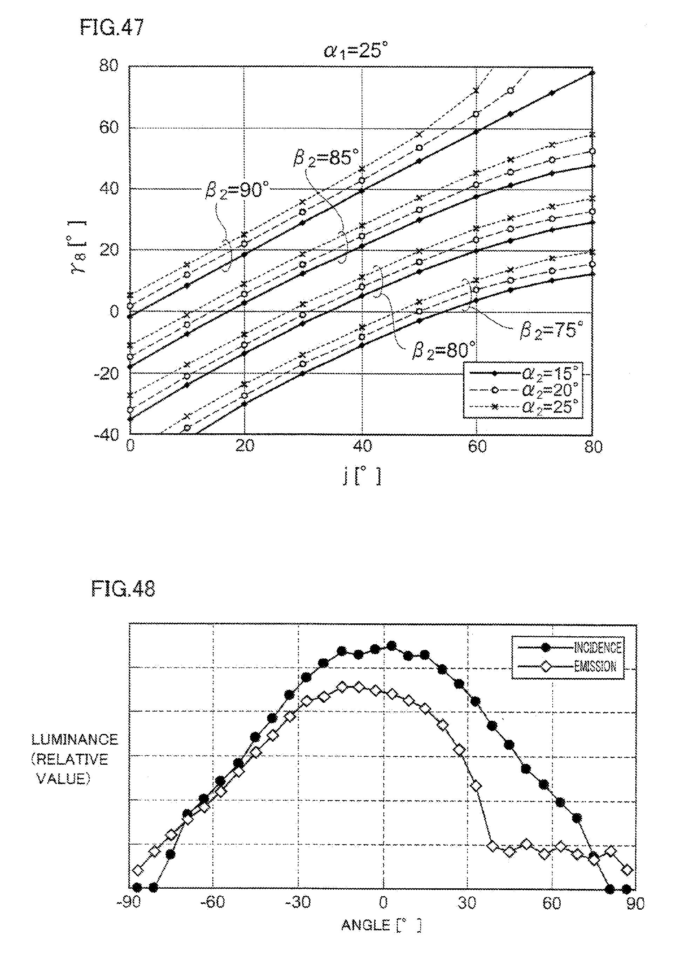

Figs. 45 to 47 are graphs showing the relationship between incidence angle j of light beam L shown in Fig. 44 to incidence plane 412a and emission angle γ8 from emission plane 414a. Fig. 45 illustrates the relationship when α1=15°. Fig. 46 illustrates the relationship when α1=20°. Fig. 47 illustrates the relationship when α1=25°. In addition, Figs. 45 to 47 illustrate the relationship when α2 and β2 are used as parameters. The relationship in Figs. 45 to 47 is obtained when $n_1$=1.4, $n_2$=1.6, and $n_0$=1.0.

As is clear from Figs. 45 to 47, as incidence angle j, that is, the incidence angle of light L incident to incidence plane 412a with inclination from one side to the other side of the prism element is increased, emission angle γ8, that is, the emission angle of light L emitted from emission plane 414a with inclination from the other side to one side of the prism element is also increased.

In addition, as is clear from Figs. 45 to 47, angle β2 formed by fourth surface 414c with respect to emission plane 414a has the most impact on emission angle γ8. Accordingly, angle β2 is preferably set to 85° or less.

In Fig. 48, the circular plot indicates the relationship between the luminance and the incidence angle of light incident to incidence plane 412a, and the square plot indicates the relationship between the luminance and the emission angle of light emitted from emission plane 414a. The direction at an angle of 0° refers to the direction normal to incidence plane 412a and emission plane 414a. Light having a negative angle refers to light traveling in the direction of inclination from one side to the other side in the direction in which the prism elements are arranged.

The angle distribution of the luminance shown in Fig. 48 is obtained by optical component 410 having the following parameters:

cycle of the prism element: 0.3 mm;
α=17°;
β1=89°;
α2=16°;
β2=76;
t1=0.25 mm;
t2=0.25 mm;
t=0.44 mm;
medium 416: air layer;
refractive index of the first prism array: 1.4; and
refractive index of the second prism array: 1.6.

As shown in Fig. 48, the luminance of the incident light had the angle distribution symmetrical to the line normal to incidence plane 412a. When this incident light entered optical component 410 and was emitted from emission plane 414a, a component traveling in the direction of inclination from the other side to one side in the direction in which the prism elements are arranged was reduced in the emitted light as shown in Fig. 48. Accordingly, it was confirmed that optical component 410 allowed control over the emission direction of light.

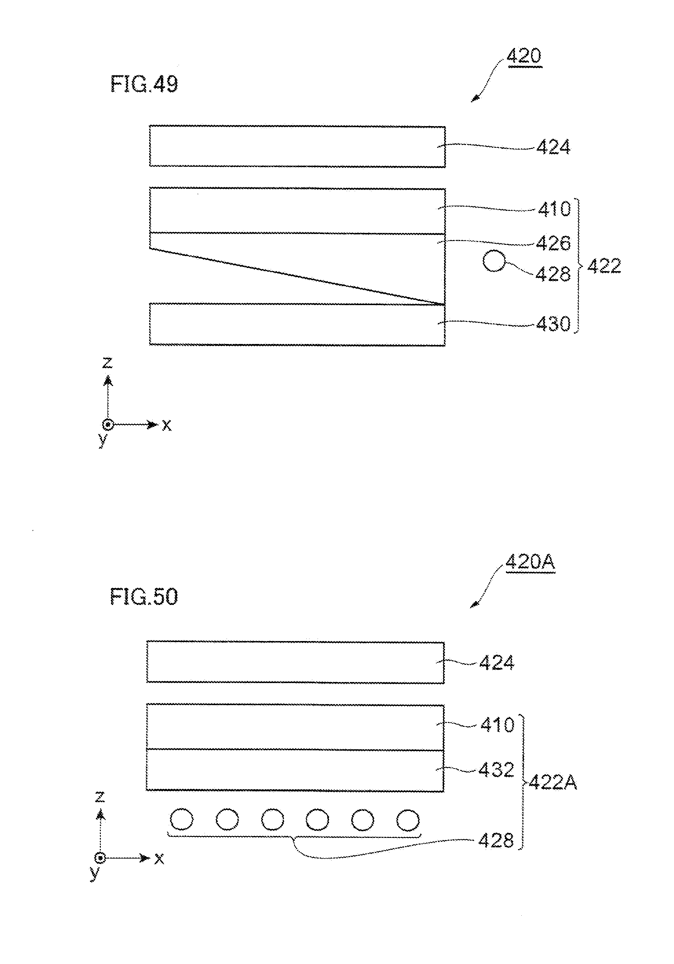

A display device in which the above optical component is used will be described hereinafter. A display device 420 shown in Fig. 49 includes a lighting device 422 and a liquid crystal panel 424. Lighting device 422 has optical component 410, a light guiding plate 426, a light source 428, and a reflector 430. It is noted that lighting device 422 may not have reflector 430. In this display device 420, light incident to an end surface of light guiding plate 426 enters optical component 410. A part of the light incident to optical component 410 enters the back surface of liquid crystal panel 424 and is emitted from the surface of this liquid crystal panel 424.

Since this display device 420 includes optical component 410, the viewing angle thereof is controlled. In addition, since display device 420 includes optical component 410, display device 420 has high efficiency of use of light.

Fig. 50 schematically illustrates a display device according to another embodiment. A display device 420A shown in Fig. 50 includes a lighting device 422A and liquid crystal panel 424. Lighting device 422A has optical component 410, light source 428 and a diffusing plate 432. In display device 420A, light from light source 428 is diffused by diffusing plate 432 and enters optical component 410. A part of the light incident to optical component 410 enters the back surface of liquid crystal panel 424 and is emitted from the surface of this liquid crystal panel 424. Since display device 420A also includes optical component 410 similarly to display device 420, the viewing angle thereof is controlled. In addition, display device 420A also has high efficiency of use of light.

It should be understood that the embodiments and examples disclosed herein are illustrative and not limitative in any respect. The scope of the present invention is defined by the terms of the claims, rather than the above description, and is intended to include any modifications within the scope and meaning equivalent to the terms of the claims.

INDUSTRIAL APPLICABILITY

The present invention is advantageously applied to a display device mounted on a mobile unit, in particular, a display device positioned adjacent to a glass surface, and a light distribution control panel used in the display device.

DESCRIPTION OF THE REFERENCE SIGNS

1, 101, 201 light distribution control panel; 2, 102 convex portion; 3, 103 the other corner portion; 4, 104 one corner portion; 5, 105 the other side surface; 6, 106 one side surface; 7, 107 base body; 8 black film; 9 different refractive index layer; 10, 110 display device; 11, 110, 230 backlight; 12, 112 display unit; 13, 113 arrow; 14 light source side surface; 15 groove; 25, 125 luminance ensuring region; 26, 27, 126, 127 low luminance region; 30 vehicle; 31 windshield; 32 seat; 33 dashboard; 210 light distribution control sheet; 211 base material; 212 convex portion; 213 first light distribution control surface; 214 second light distribution control surface; 215 light control member; 220 liquid crystal panel; 310, 410 optical component; 312 first lens array; 312a first lens element; 312b incidence surface; 314 second lens array; 314a second lens element; 314b emission surface; 316 light blocking portion array; 316a light blocking portion; 316b space; 320, 320A, 420, 420A display device; 324, 424 liquid crystal panel; 326, 426 light guiding plate; 328, 428 light source; 330, 430 reflector; 332, 432 diffusing plate; 412 first prism array; 412a incidence plane; 412b first surface; 412c second surface; 414 second prism array; 414a emission plane; 414b third surface; 414c fourth surface; 416 medium; 422, 422A lighting device

**Claims**

1. A light distribution control panel (1), comprising a plate-like or sheet-like base material made of a translucent material,
   said base material having a plurality of convex portions (2) for light distribution control formed on one surface of said base material opposite to a light source side,
   said plurality of convex portions (2) being positioned to extend in parallel to one another, and
   said light distribution control panel (1) further comprising a light transmission suppressing portion (6) for suppressing emission, from at least a part of a surface of said convex portion (2), of light incident from a surface of said base material on the light source side.

2. The light distribution control panel according to claim 1, wherein
   said light transmission suppressing portion includes a light absorbing layer (8) formed on the surface of said convex portion (2).

3. The light distribution control panel according to claim 1, wherein
   said light transmission suppressing portion includes a different refractive index layer (9) formed on the surface of said convex portion (2) and having a refractive index different from a refractive index of a material that configures said convex portion.

4. The light distribution control panel according to claim 1, wherein
   said convex portion (2) has a triangle-like cross section in a direction perpendicular to a direction in which said convex portion extends, and
   said light transmission suppressing portion suppresses emission of said light in said convex portion (2) from one side surface (6) that is continuous with any one of two corner portions located at a boundary portion between said convex portion (2) and the surface of said base material in said cross section.

5. The light distribution control panel according to claim 4, wherein
   said light transmission suppressing portion includes a light source side light absorbing layer (8) formed on a light source side surface of said base material to block at least a part of a path of light emitted from said one side surface, of light incident from said light source side surface to said base material when said light source side surface is flat.

6. The light distribution control panel according to claim 4, wherein
   said light transmission suppressing portion includes a groove (15) formed on a light source side surface of said base material to intersect a path of light emitted from said one side surface, of light incident from said light source side surface to said base material when said light source side surface is flat.

7. The light distribution control panel according to claim 4, wherein
   in said convex portion (2), roughness of said one side surface (6) is larger than roughness of the other side surface (5) that is continuous with the other corner portion of said two corner portions.

8. The light distribution control panel according to claim 7, wherein
   a ratio (A/B) between roughness A of said one side surface and roughness B of said the other side surface is 3 or more and 3000 or less.

9. The light distribution control panel according to claim 4, wherein
   the other corner portion (3) of said two corner portions has an angle $\alpha$ of 5° or more and 40° or less, and said one corner portion (4) has an angle $\beta$ of 60° or more and 90° or less.

10. A display device for mounting on a mobile unit, comprising:

    a light source (11);
    the light distribution control panel (1) according to claim 1 positioned on said light source (11); and
    a display unit (12) mounted on said light distribution control panel (1).

11. The display device for mounting on a mobile unit according to claim 10, wherein
    said display device for mounting on a mobile unit is positioned at a site adjacent to a glass surface in a mobile unit (30), and
    said display device for mounting on a mobile unit is positioned such that a direction perpendicular to a direction in which said convex portion (2) extends matches a direction toward said glass surface.

**12.** A light distribution control panel (101), comprising a plate-like or sheet-like base material made of a translucent material,

said base material having a plurality of convex portions (102) for light distribution control formed on one surface of said base material on a light source side, said plurality of convex portions (102) being positioned to extend in parallel to one another and each having a triangle-like cross section in a direction perpendicular to a direction in which said convex portion extends,

said base material having a refractive index of 1.4 or more and 1.6 or less,

said light distribution control panel (101) having a light transmittance of 70% or more,

in said convex portion (102), one corner portion (104) of two corner portions located at a boundary portion between said convex portion (102) and a surface of said base material in said cross section having an angle $\beta$ of 60° or more and 90° or less, and the other corner portion (103) having an angle $\alpha$ of 5° or more and 40° or less, and

a ratio (A/B) between roughness A of one side surface (106) of a surface of said convex portion (102) that is continuous with said one corner portion (104) and roughness B of the other side surface (105) of the surface of said convex portion (102) that is continuous with said the other corner portion (103) being 3 or more and 3000 or less.

**13.** The light distribution control panel according to claim 12, wherein

a width of said convex portion (102) in the direction perpendicular to the direction in which said convex portion (102) extends is 20 $\mu$m or more and 500 $\mu$m or less.

**14.** A display device for mounting on a mobile unit, comprising:

a light source (110);
the light distribution control panel (101) according to claim 1 or 2 positioned on said light source (110); and
a display unit (112) mounted on said light distribution control panel (101).

**15.** The display device for mounting on a mobile unit according to claim 14, wherein

said display device for mounting on a mobile unit is positioned at a site adjacent to a glass surface in a mobile unit (30), and

said display device for mounting on a mobile unit is positioned such that a direction perpendicular to a direction in which said convex portion (102) extends matches a direction toward said glass surface.

**16.** A light distribution control sheet (210), comprising one or a plurality of linear convex portions (212) on a translucent sheet-like base material (211),

said convex portion (212) having at least two light distribution control surfaces (213, 214) that each forms a different acute angle or right angle with respect to a surface of the base material (211), and

said light distribution control sheet (210) further comprising a light control member (215) provided on at least a part of a region of the light distribution control surface (214) of said two light distribution control surfaces (213, 214) that forms a large angle with respect to said surface of the base material.

**17.** The light distribution control sheet (210) according to claim 16, wherein the light control member (215) is provided all over said light distribution control surface (214).

**18.** The light distribution control sheet according to claim 16, wherein

said light control member (215) is a black film.

**19.** The light distribution control sheet according to claim 16, wherein

said light control member (215) is an antireflective film.

**20.** The light distribution control sheet according to claim 16, wherein

said convex portion (212) has a triangular cross section.

**21.** The light distribution control sheet according to claim 16, wherein

an angle formed by one light distribution control surface (213) and the surface of the base material is 5° or more and 40° or less, and an angle formed by the other light distribution control surface (214) and the surface of the base material is 60° or more and 90° or less.

**22.** A light distribution control panel (201), comprising:

the light distribution control sheet (210) according to claim 16; and
an image display panel.

**23.** The light distribution control panel according to claim 22, wherein

said image display panel is a display panel including a light source (230) and a liquid crystal display panel (220).

**24.** The light distribution control panel according to claim 22, wherein
said image display panel is a self-light-emitting image display panel.

25. A display device for mounting on a mobile unit, comprising the light distribution control panel (201) according to claim 22.

26. An optical component (310), comprising:

a first lens array (312) having a plurality of first lens elements (312a) arranged in one direction; a second lens array (314) having a plurality of second lens elements (314a) arranged in one direction; and a light blocking portion array (316) having a plurality of light blocking portions (316a) arranged in one direction with a spacing therebetween, wherein said plurality of first lens elements (312a) each has a convex incidence surface, said plurality of second lens elements (314a) each has a convex emission surface, and said first lens array (312) collects a part of incident light between said plurality of light blocking portions (316a) and couples the part of incident light to said second lens array (314), and couples, to any one of said plurality of light blocking portions (316a), at least in part a different part of incident light incident at a larger angle with respect to an optical axis of said plurality of first lens elements (312a) than an angle formed by an incident direction of said part of incident light with respect to said optical axis.

27. The optical component (310) according to claim 26, wherein said light blocking portion is not located on the optical axis of said plurality of first lens elements (312a) and on an optical axis of said plurality of second lens elements (314a).

28. The optical component (310) according to claim 27, wherein said light blocking portion (316) is located between a boundary between adjacent said first lens elements (312a) and a boundary between adjacent said second lens elements (314a).

29. The optical component (310) according to claim 26, wherein the optical axis of said plurality of first lens elements (312a) matches an optical axis of said plurality of second lens elements (314a).

30. The optical component (310) according to claim 26, wherein said plurality of first lens elements (312a) and said plurality of second lens elements (314a) are cylindrical lenses.

31. A lighting device, comprising:

the optical component (310) according to claim 26; a light source (428); and a light guiding plate (326) for guiding, to said optical component (310), light emitted from said light source (428).

32. A display device, comprising:

the lighting device according to claim 31; and a liquid crystal panel (324) for receiving light emitted from said lighting device and emitting the light.

33. An optical component (410), comprising:

a first prism array (412) having an incidence plane (412a) as well as a plurality of first surfaces (412b) and a plurality of second surfaces (412c) provided alternately; and a second prism array (414) having an emission plane (414a) as well as a plurality of third surfaces (414b) and a plurality of fourth surfaces (414c) provided alternately, wherein adjacent first surface (412b) and second surface (412c) of said plurality of first surfaces (412b) and said plurality of second surfaces (412c) extend along surfaces inclined with respect to said incidence plane (412a) and intersecting each other, an inclination angle formed by said plurality of first surfaces (412b) with respect to said incidence plane (412a) is smaller than an inclination angle formed by said plurality of second surfaces (412c) with respect to said incidence plane (412a), and the adjacent first surface (412b) and second surface (412c) as well as said incidence plane (412a) configure a prism element, adjacent third surface (414b) and fourth surface (414c) of said plurality of third surfaces (414b) and said plurality of fourth surfaces (414c) extend along surfaces inclined with respect to said emission plane (414a) and intersecting each other, an inclination angle formed by said plurality of third surfaces (414b) with respect to said emission plane (414a) is smaller than an inclination angle formed by said plurality of fourth surfaces (414c) with respect to said emission plane (414a), and the adjacent third surface (414b) and fourth surface (414c) as well as said emission plane (414a) configure a prism element, said first prism array (412) and said second prism array (414) are spaced such that said first surface (412b) faces said third surface (414b) and said second surface (412c) faces said fourth surface (414c), and

a refractive index of said first prism array (412) and a refractive index of said second prism array (414) are larger than a refractive index of a medium (416) between the first prism array (412) and the second prism array (414).

**34.** The optical component (410) according to claim 33, wherein

an angle formed by said fourth surface (414c) with respect to said emission plane (414a) is 85° or less.

**35.** The optical component according to claim 34, wherein

said medium (416) is a layer of air.

**36.** The optical component according to claim 35, wherein

the refractive index of said first prism array (412) is lower than the refractive index of said second prism array (414).

**37.** A lighting device (422), comprising the optical component (410) according to claim 33.

**38.** A display device (420), comprising the optical component (410) according to claim 33.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

210

FIG.19

ANGLE (°)

FIG.20

210

FIG.21

FIG.22

$\alpha = 25°$

FIG.23

$\alpha = 20°$

## FIG.24

$\alpha = 15°$

Legend: $\beta = 90°$, $\beta = 80°$, $\beta = 70°$, BL

## FIG.25

$\alpha = 25°$ 、 $\beta = 85°$

LUMINANCE (RELATIVE VALUE)

ANGLE [°]

Legend: PRODUCT OF THE PRESENT INVENTION, REFERENCE EXAMPLE 1, REFERENCE EXAMPLE 2, BL SINGLE BODY

FIG.26

210

216  216  216
213  215  213  215  213  215  214
214  214
α  β
212  212  212
211

FIG.27

211
214  β  α
218  213
212  218

FIG.28

211
214  β  α  213
218  212  218

FIG.29

(A)

314

314b 314a 314b 314a 314b 314a 314b 314a 314b 314a

316a

316

316b

312b 312a 312b 312a 312b 312a 312b 312a 312b 312a

312

(B)

310

314

316

312

EP 2 270 556 A1

45

FIG.30

EP 2 270 556 A1

FIG.31

LIGHT POWER TRANSMITTANCE

EMISSION ANGLE [°]

Legend:
- - - - WITHOUT LENS ARRAY
——— WITH LENS ARRAY

FIG.32

EP 2 270 556 A1

EP 2 270 556 A1

FIG.33

FIG.34

FIG.35

EP 2 270 556 A1

FIG.36

FIG.37

320

324

310
326
328
322
330

z
y
x

320A

FIG.38

324

310
332
322A
328

z
y
x

FIG.39

FIG.40

FIG.41

$n_1$  $n_0$  $n_2$

412c
412a
412b

414a

$\theta_7$
$\theta_6$
$\alpha_2$
$\theta_4$  $\theta_5$

414b

$\theta_2$  $\theta_3$

$\theta_1$

414c

$\alpha_1$

i

L

x
y
z

FIG.42

FIG.43

(A)

412a — | 414a

L

412c — | 414c

(B)

412a — | 414a

L

412c — | 414c

(C)

412a

L

412b —
416 —
412c —
414a
414c

(D)

L

414a
414b

412a —

412b —
416 —
412c —
414c

(E)

L

412a —

412c —
414a
414b

412b —
416 —
414c

X
↑
⊙ →z
y

EP 2 270 556 A1

FIG.44

FIG.45

FIG.46

FIG.47

$\alpha_1 = 25°$

FIG.48

FIG.49

420

424

410
426
428
422
430

z
y x

FIG.50

420A

424

410
432
422A
428

z
y x

FIG.51

FIG.52

ANGLE (°)

<table>
<tr><td colspan="2"><b>INTERNATIONAL SEARCH REPORT</b></td><td>International application No.<br>PCT/JP2009/057496</td></tr>
</table>

| | |
|---|---|
| A. CLASSIFICATION OF SUBJECT MATTER<br>*G02B5/02*(2006.01)i, *B60K35/00*(2006.01)i, *G02B5/00*(2006.01)i, *G02F1/13357*<br>(2006.01)i | |

According to International Patent Classification (IPC) or to both national classification and IPC

B. FIELDS SEARCHED

Minimum documentation searched (classification system followed by classification symbols)
G02B5/02, B60K35/00, G02B5/00, G02F1/13357

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-79978 A (Optrex Corp.),<br>23 March, 2006 (23.03.06),<br>Par. Nos. [0022] to [0024], [0047] to [0049],<br>[0055] to [0057]; Figs. 5, 7, 8<br>(Family: none) | 1,2,14,15 |
| X | JP 2007-293172 A (Toppan Printing Co., Ltd.),<br>08 November, 2007 (08.11.07),<br>Claims 1, 5; Figs. 1, 4<br>(Family: none) | 1,2 |
| A | JP 2000-193809 A (Matsushita Electric Works,<br>Ltd.),<br>14 July, 2000 (14.07.00),<br>Full text; all drawings<br>(Family: none) | 1,2,14,15 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 July, 2009 (03.07.09) | Date of mailing of the international search report<br>14 July, 2009 (14.07.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/057496

C (Continuation).  DOCUMENTS CONSIDERED TO BE RELEVANT

| Category* | Citation of document, with indication, where appropriate, of the relevant passages | Relevant to claim No. |
|---|---|---|
| A | JP 7-503919 A  (Milner, Peter James),<br>27 April, 1995 (27.04.95),<br>Full text; all drawings<br>& US 5731900 A1          & EP 585304 A | 1,2,14,15 |

Form PCT/ISA/210 (continuation of second sheet) (April 2007)

**INTERNATIONAL SEARCH REPORT**

International application No.

PCT/JP2009/057496

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
A feature common to the inventions in claims 1, 3, 4 and 10 is "a light distribution control panel provided with a plurality of convex portions that are formed on a surface of a side reverse to a light source side of a base member to extend in parallel with each other and that are used for the control of light distribution and a light transmission suppressing unit for suppressing light incident from the front surface of the light source side of the base member to project from at least a part of the front surface of the convex portions" but the common feature is disclosed in document 1 (the document of JP 2006-79978 A). (To be continued to the extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
1, 2, 14 and 15.

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/057496 |

Continuation of Box No.III of continuation of first sheet(2)

    Thus, the common feature is neither novel nor the special technical feature.
    Therefore, there are no features common to all the inventions in claim 1, claims 3, 4 and 10, and claims 5-9 and 11 dependent on claim 1, claims 3, 4 and 10.

    Similarly, no inventions in claim 12, 16, 26 and 33 or in claims 13, 17-25, 27-32 and 34-38 dependent on claim 12, 16, 26 and 33 have the special technical features common to claim 1.

Form PCT/ISA/210 (extra sheet) (April 2007)

**EP 2 270 556 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000193809 A

- JP 2001305312 A

**Non-patent literature cited in the description**

- View Control Technology by Shin-Etsu VCF. *Monthly Display,* May 2006, 62-69